# EUROPEAN PATENT APPLICATION

(11) **EP 4 496 319 A1**
(43) Date of publication of application: **22.01.2025**
(21) Application number: 23770881.3
(22) Date of filing: 16.03.2023
(51) Int. Cl.: H04N 21/43

(54) **INFORMATION PROCESSING DEVICE AND METHOD**

(30) Priority: 18.03.2022 US 202263321305 P
(71) Applicant: Sony Group Corporation, Tokyo 108-0075 (JP)
(72) Inventor: HIRABAYASHI, Mitsuhiro, Tokyo 108-0075 (JP); TAKAHASHI, Ryohei, Tokyo 108-0075 (JP)
(74) Representative: D Young & Co LLP
(86) International application number: PCT/JP2023/010321
(87) International publication number: WO 2023/176928

(57) **Abstract**

The present disclosure relates to an information processing device and a method that can suppress reduction in reproduction performance of media data associated with 3D data.

An accessor for storing dynamic haptics media associated with 3D data in a predetermined storage area is specified in a scene description file. Encoded data of the dynamic haptics media is acquired and encoded based on the basis of the scene description file and is stored in a storage area corresponding to the accessor specified by the scene description file. Further, a description regarding interactive media is stored in the scene description file, and encoded data of the interactive media is acquired and decoded on the basis of the description. The present disclosure can be applied to, for example, an information processing device, an information processing method, or the like.

## Description

### [Technical Field]

The present disclosure relates to an information processing device and method, and particularly to an information processing device and method that can suppress reduction in reproduction performance of media data associated with 3D data.

### [Background Art]

Conventionally, there was glTF (GL Transmission Format) (registered trademark) 2.0, which is a scene description format for arranging 3D (three-dimensional) objects in a three-dimensional space and rendering the same (for example, see NPL 1).

Furthermore, in MPEG (Moving Picture Experts Group)-I Scene Description, a method was proposed that extended glTF2.0 to handle dynamic content in the time direction (for example, see NPL 2).

By the way, standardization of technologies for encoding and transmitting haptics information (also called haptics media) in addition to audio and video media, which are the constituent elements of 2D video content and 3DoF (Degree of Freedom)/6DoF video content has begun (for example, see NPL 3).

In addition, a basic function for storing a bitstream of which the haptics media is encoded in ISOBMFF (International Organization for Standardization Base Media File Format) has been created (for example, see NPL 4).

In addition, in parallel with the standardization of haptics media encoding and transmission technology, studies have begun to search for a technology for handling haptics media using MPEG-I Scene Description (see, for example, NPL 5).

### [Citation List]

### [Non Patent Literature]

[NPL 1]
   Saurabh Bhatia, Patrick Cozzi, Alexey Knyazev, Tony Parisi, "Khronos glTF2.0", https://github.com/KhronosGroup/glTF/tree/master/specification/2.0, June 9, 2017
[NPL 2]
   "Text of ISO/IEC CD 23090-14 Scene Description for MPEG Media", ISO/IEC JTC 1/SC 29/WG 3N00485, 2021/10/12
[NPL 3]
   Quentin Galvane, Fabien Danieau, Philippe Guillotel, Eric Vezzoli, Alexandre Hulsken, Titouan Rabu, Andreas Noll, Lars Nockenberg, "WD on the Coded Representation of Haptics - Phase 1", ISO/IEC JTC 1/SC 29/WG 2, m58748, 2021/10/
[NPL 4]
   "Information technology - Coding of audio-visual objects - Part 12: ISO base media file format, TECHNICAL CORRIGENDUM 1",ISO/IEC 14496-12: 2015/Cor.l, ISO/IEC JTC 1/SC 29/WG 11, 2016/6/3
[NPL 5]
   Chris Ullrich, Yeshwant Muthusamy, Fabien Danieau, Quentin Galvane, Philippe Guillotel, Eric Vezzoli, Titouan Rabu, "MPEG-I SD Revised Haptic Schema and Processing Model", ISO/IEC JTC 1/SC 29/WG 3m58487_v3, 2021/10/

### [Summary]

### [Technical Problem]

However, studies to search for a technology for handling media data associated with 3D data such as haptics media with scene descriptions have just begun, and there are still some media data that cannot be handled correctly with scene descriptions. Therefore, there was a risk that the reproduction performance of media data associated with 3D data would be reduced.

The present disclosure has been made in view of such circumstances, and is intended to suppress a reduction in reproduction performance of media data associated with 3D data.

### [Solution to Problem]

An information processing device according to one aspect of the present technology is an information processing device including: an acquisition unit that acquires encoded data of dynamic haptics media associated with 3D data to be reproduced on the basis of a description of a scene description file; a decoding unit that decodes the encoded data based on the description of the scene description file and generates data of the haptics media; a storage unit that stores the data of the haptics media in a storage area corresponding to an accessor specified by the scene description file; and a generation unit that reads the data of the haptics media stored in the storage area based on the description of the scene description file and generate haptics media information for output..

An information processing method according to one aspect of the present technology is an information processing method including: acquiring encoded data of dynamic haptics media associated with 3D data to be reproduced on the basis of a description of a scene description file; decoding the encoded data based on the description of the scene description file and generating data of the haptics media; storing the data of the haptics media in a storage area corresponding to an accessor specified by the scene description file; and reading the data of the haptics media stored in the storage area based on the description of the scene description file and generate haptics media information for output.

An information processing device according to another aspect of the present technology is an information processing device including a file generation unit that generates a scene description file that specifies an accessor for storing dynamic haptics media associated with 3D data in a predetermined storage area.

An information processing method according to another aspect of the present technology is an information processing method including generating a scene description file that specifies an accessor for storing dynamic haptics media associated with 3D data in a predetermined storage area.

An information processing device according to still another aspect of the present technology is an information processing device including: an acquisition unit that acquires encoded data of interactive media associated with 3D data to be reproduced on the basis of a description regarding interactive media included in a scene description file; and a decoding unit that decodes the acquired encoded data based on the description of the scene description file and generates data of the interactive media.

An information processing method according to still another aspect of the present technology is an information processing method including: acquiring encoded data of interactive media associated with 3D data to be reproduced on the basis of a description regarding the interactive media included in a scene description file; and decoding the acquired encoded data based on the description of the scene description file and generating data of the interactive media.

An information processing device according to still another aspect of the present technology is an information processing device including a file generation unit that generates a scene description file that includes a description regarding interactive media associated with 3D data.

An information processing method according to still another aspect of the present technology is an information processing method including generating a scene description file that includes a description regarding interactive media associated with 3D data.

In the information processing device and method according to one aspect of the present technology, encoded data of dynamic haptics media associated with 3D data to be reproduced is acquired on the basis of a description of a scene description file, the encoded data is decoded on the basis of the description of the scene description file and the data of the haptics media is generated, the data of the haptics media is stored in a storage area corresponding to an accessor specified by the scene description file, and the data of the haptics media stored in the storage area is read on the basis of the description of the scene description file and haptics media information for output is generated.

In the information processing device and method according to another aspect of the present technology, a scene description file that specifies an accessor for storing dynamic haptics media associated with 3D data in a predetermined storage area is generated.

In the information processing device and method according to still another aspect of the present technology, encoded data of interactive media associated with 3D data to be reproduced is acquired on the basis of a description regarding the interactive media included in a scene description file, and the acquired encoded data is decoded on the basis of the description of the scene description file, and data of the interactive media is generated.

In the information processing device and method according to still another aspect of the present technology, a scene description file including a description regarding interactive media associated with 3D data is generated.

### [Brief Description of Drawings]

[Fig. 1]

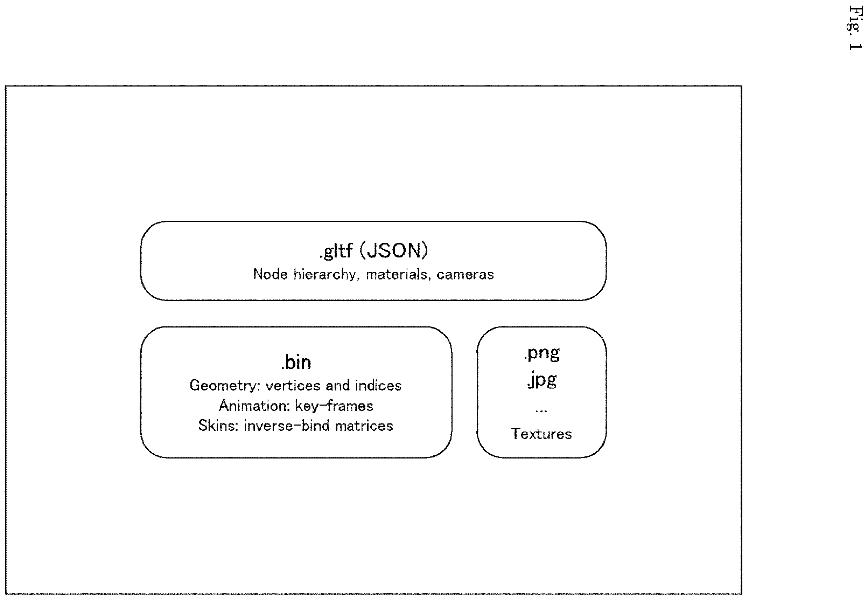

   Fig. 1 is a diagram illustrating a main configuration example of glTF2.0.
[Fig. 2]

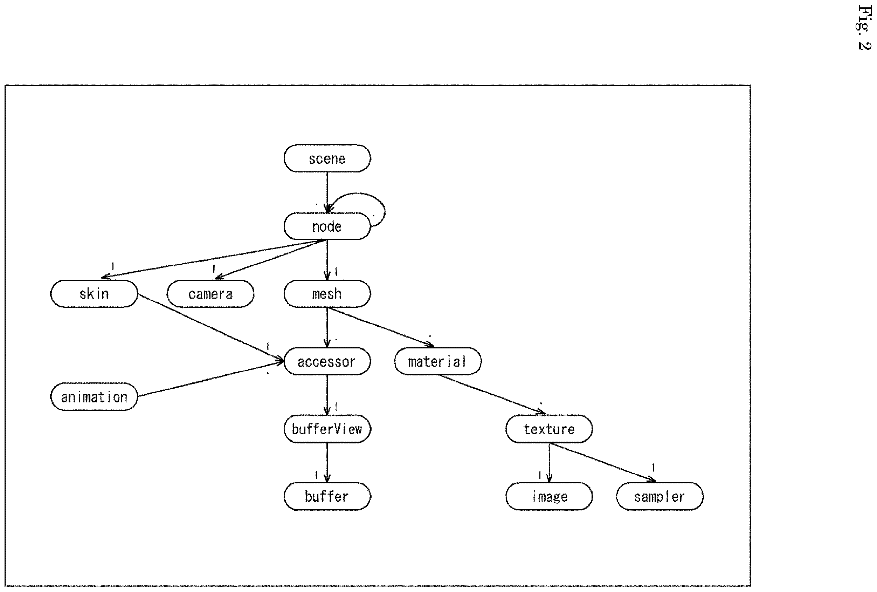

   Fig. 2 is a diagram illustrating an example of a glTF object and a reference relationship.
[Fig. 3]

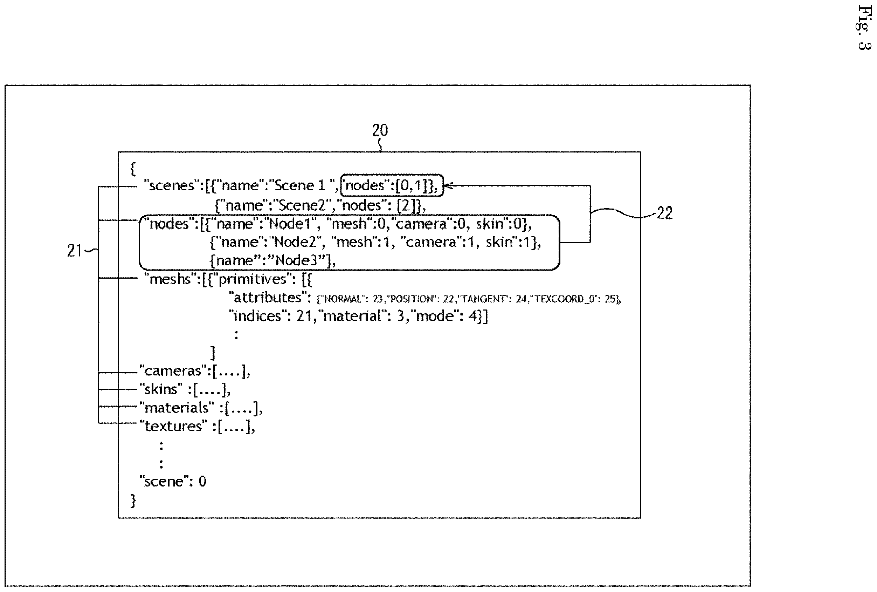

   Fig. 3 is a diagram illustrating a description example of scene description.
[Fig. 4]

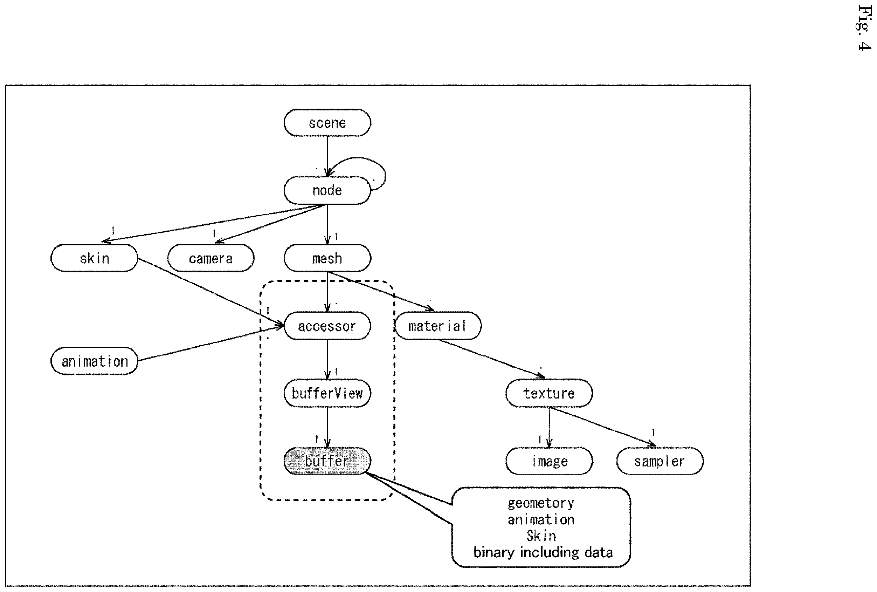

   Fig. 4 is a diagram illustrating a method for accessing binary data.
[Fig. 5]

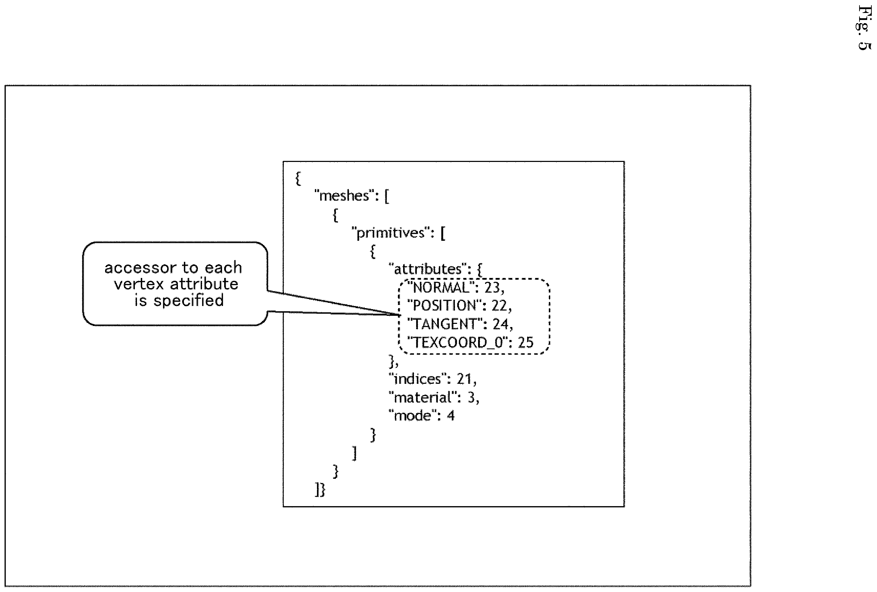

   Fig. 5 is a diagram illustrating a description example of scene description.
[Fig. 6]

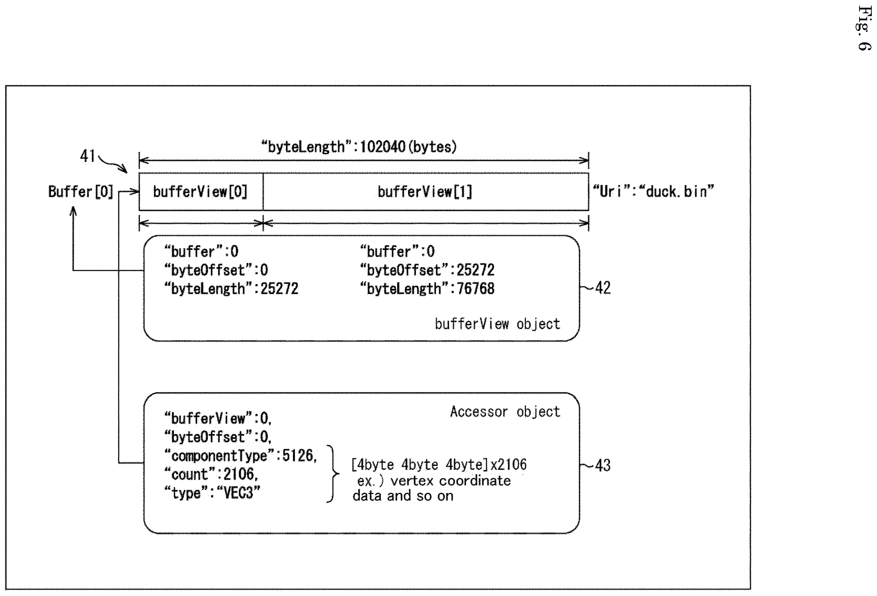

   Fig. 6 is a diagram for explaining the relationship between a buffer object, a buffer view object, and an accessor object.
[Fig. 7]

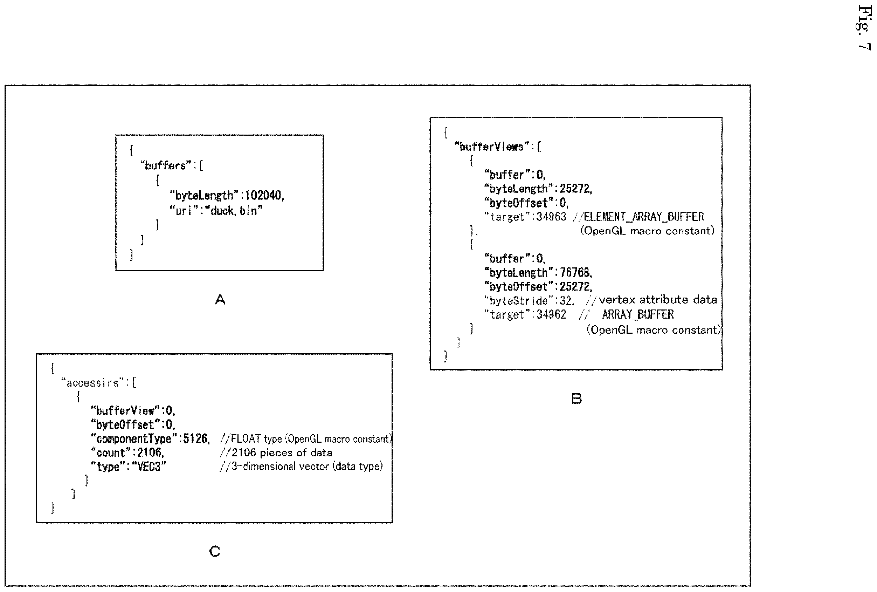

   Fig. 7 is a diagram illustrating a description example of a buffer object, a buffer view object, and an accessor object.
[Fig. 8]

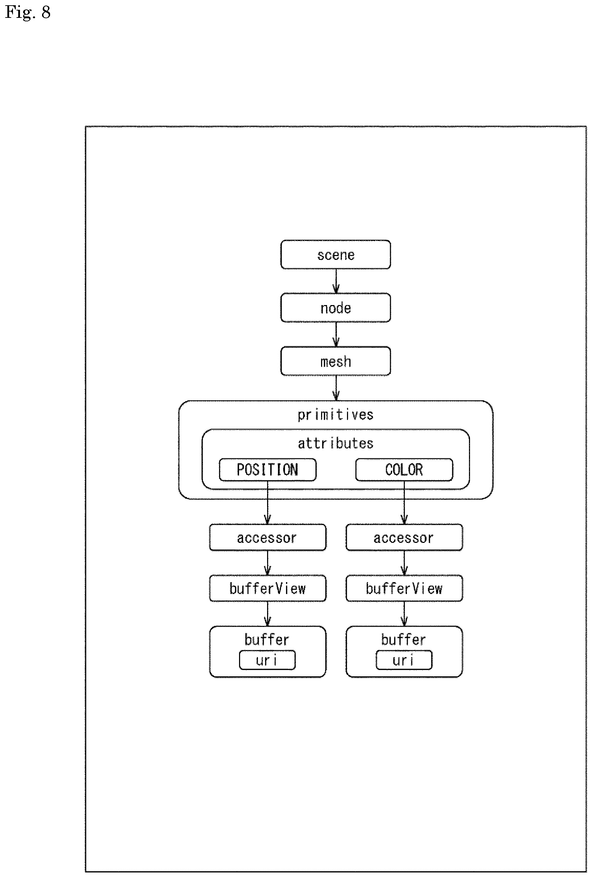

   Fig. 8 is a diagram for explaining a configuration example of an object for scene description.
[Fig. 9]

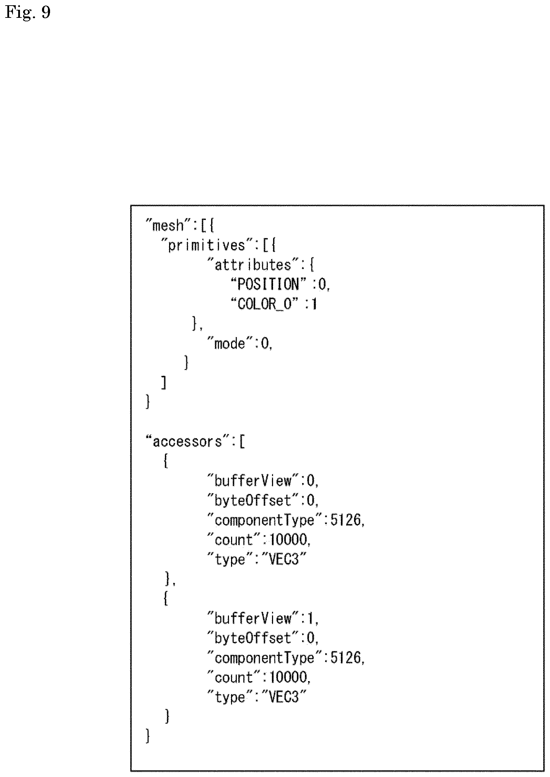

   Fig. 9 is a diagram illustrating a description example of scene description.
[Fig. 10]

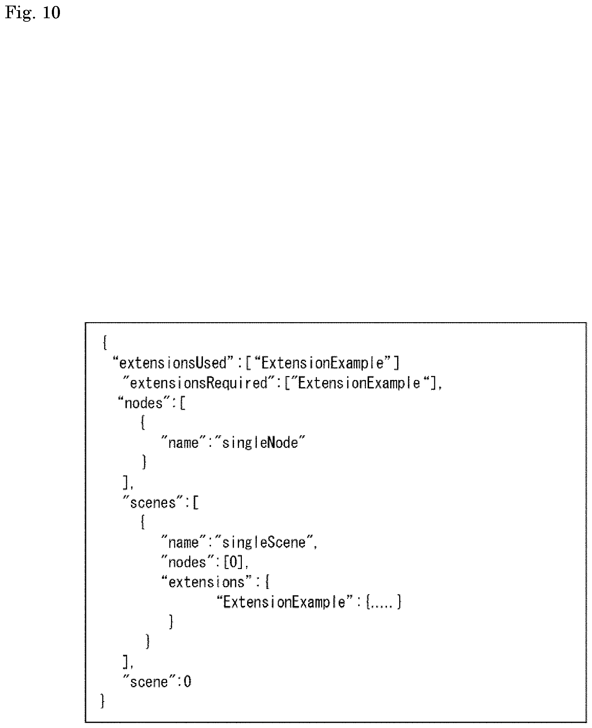

   Fig. 10 is a diagram for explaining a method for extending an object.
[Fig. 11]

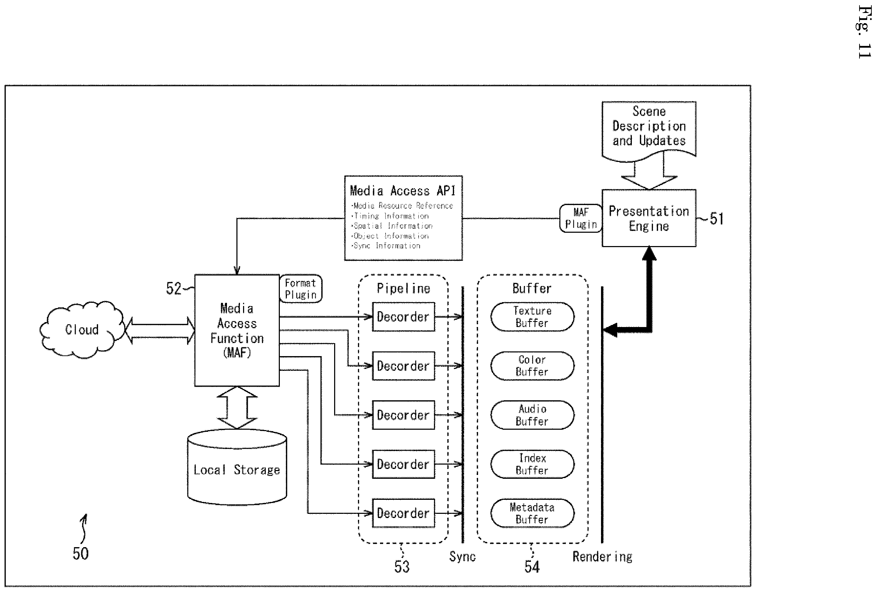

   Fig. 11 is a diagram for explaining a configuration of client processing.
[Fig. 12]

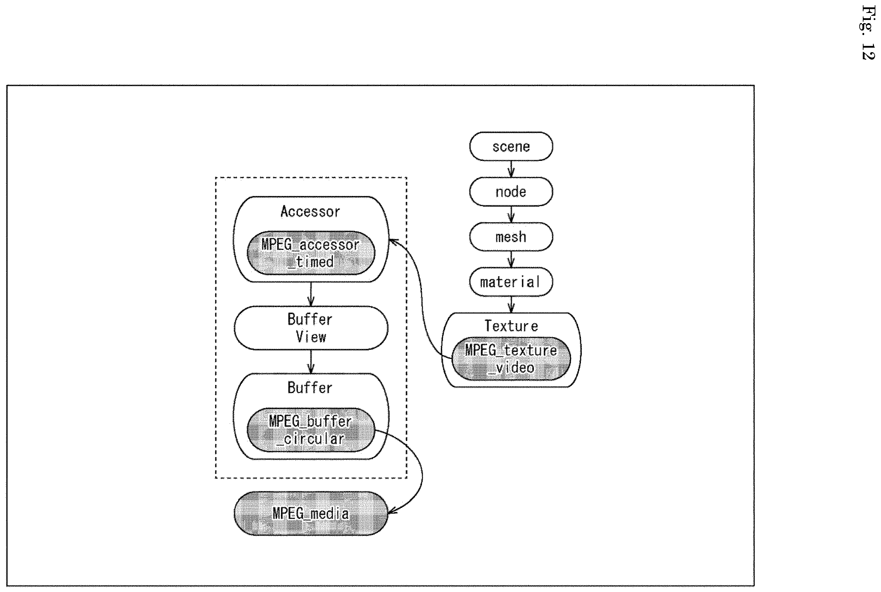

   Fig. 12 is a diagram illustrating a configuration example of extension to handle timed metadata.
[Fig. 13]

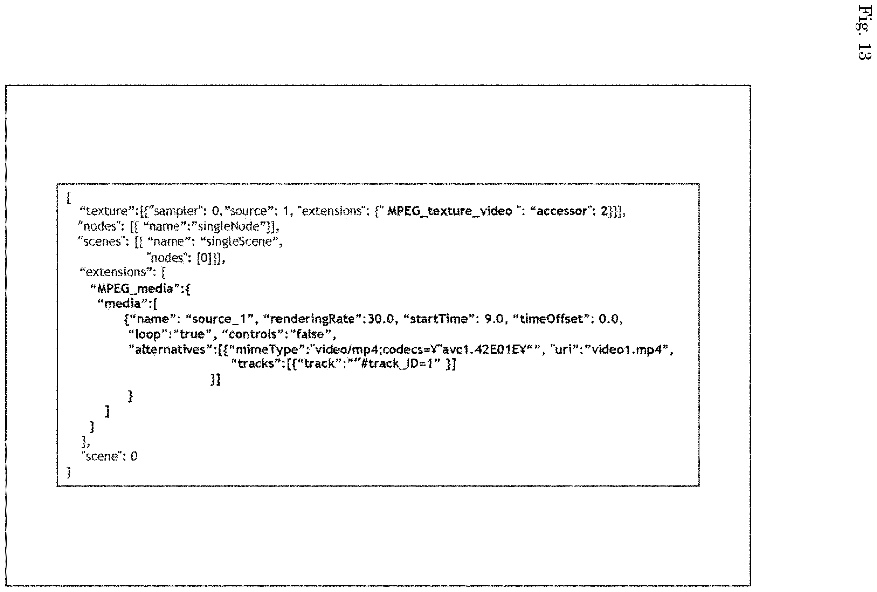

   Fig. 13 is a diagram illustrating a description example of scene description.
[Fig. 14]

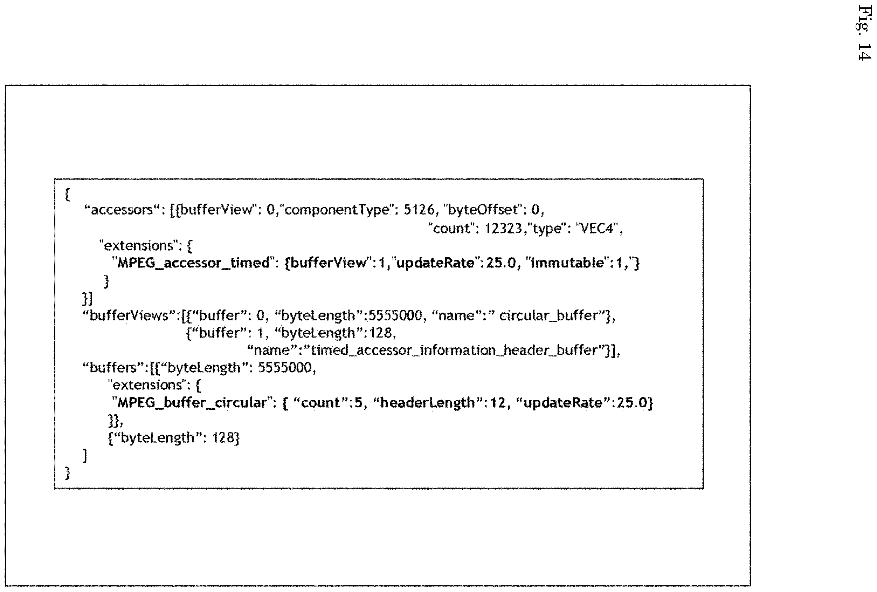

   Fig. 14 is a diagram illustrating a description example of scene description.
[Fig. 15]

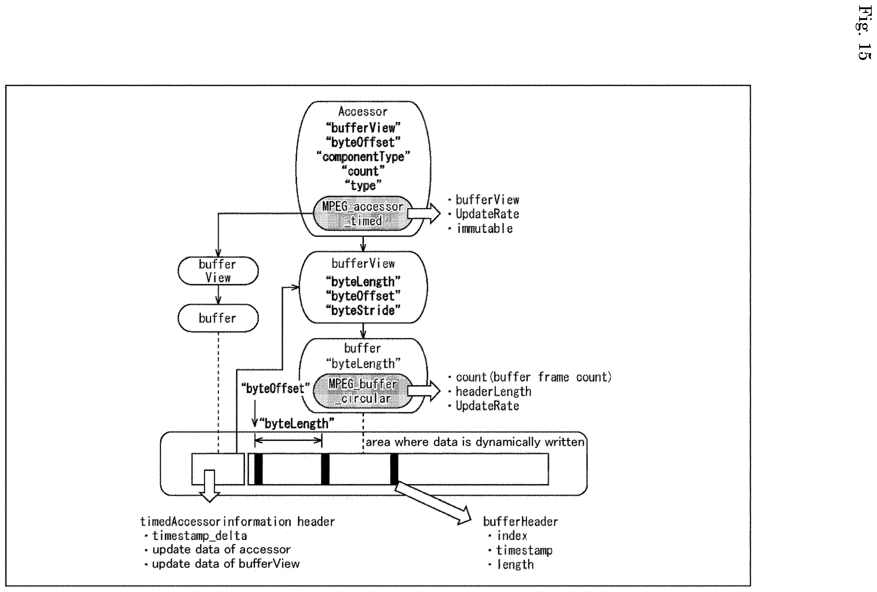

   Fig. 15 is a diagram illustrating a configuration example of extension to handle timed metadata.
[Fig. 16]

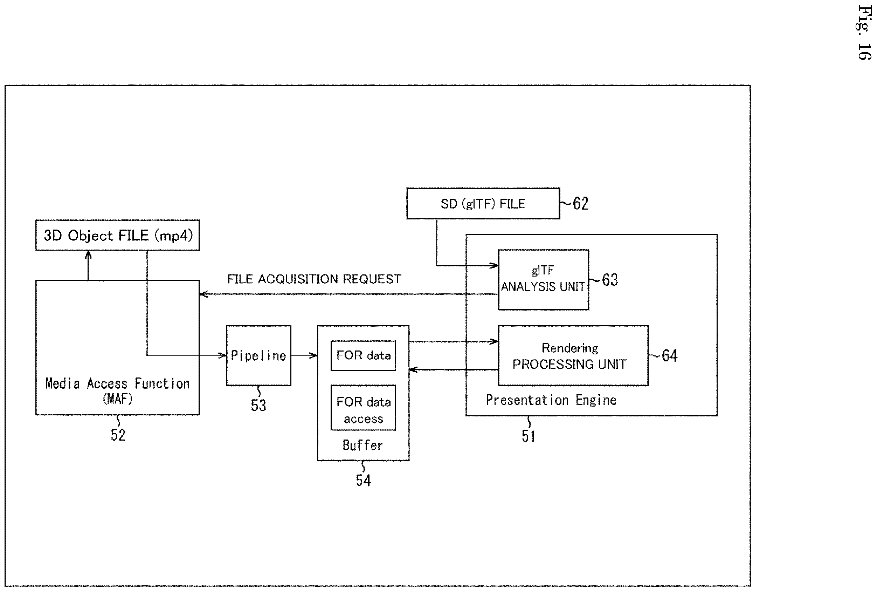

   Fig. 16 is a diagram illustrating a main configuration example of a client.
[Fig. 17]

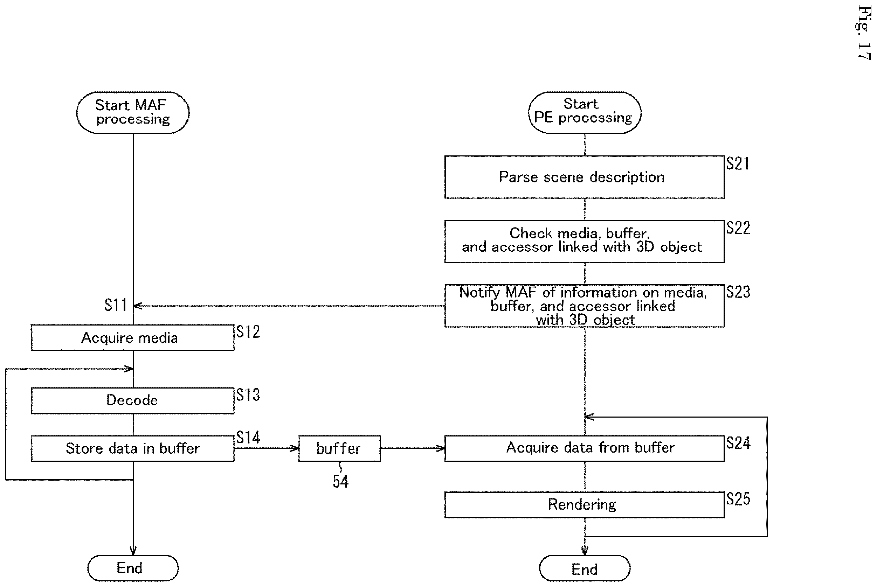

   Fig. 17 is a flowchart for explaining an example of a flow of client processing.
[Fig. 18]

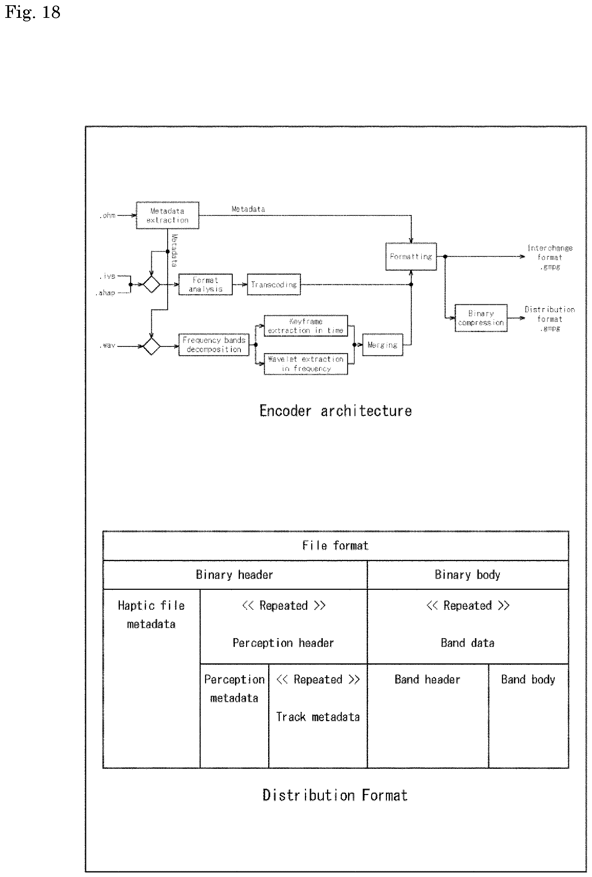

   Fig. 18 is a diagram illustrating an overview of haptics media encoding.
[Fig. 19]

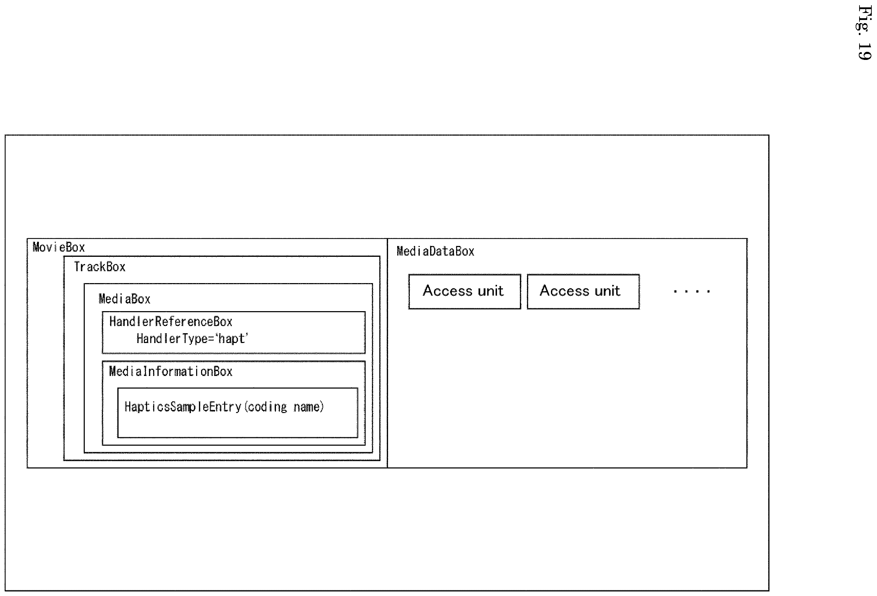

   Fig. 19 is a diagram illustrating an example of extending ISOBMFF for storing haptics media.
[Fig. 20]

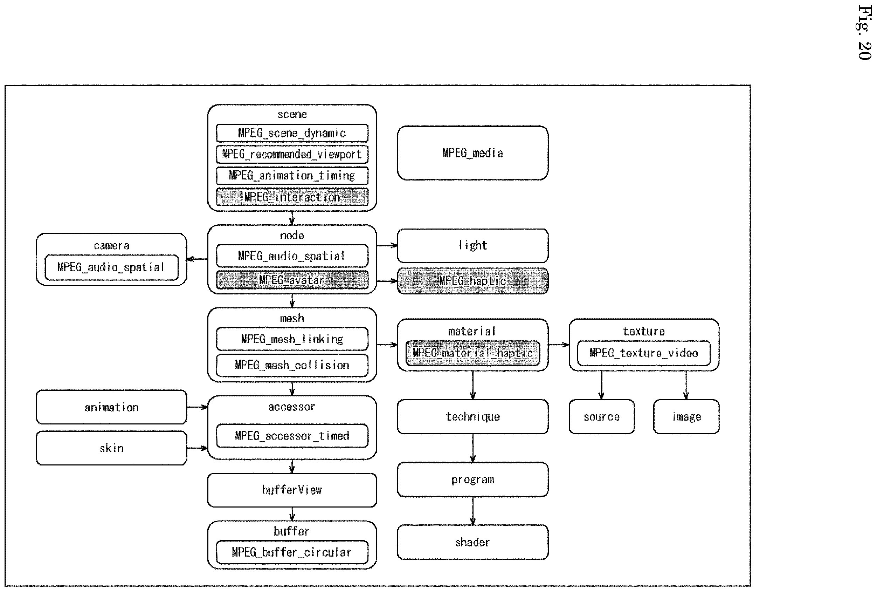

   Fig. 20 is a diagram illustrating an example of extending scene descriptions for handling haptics media.
[Fig. 21]

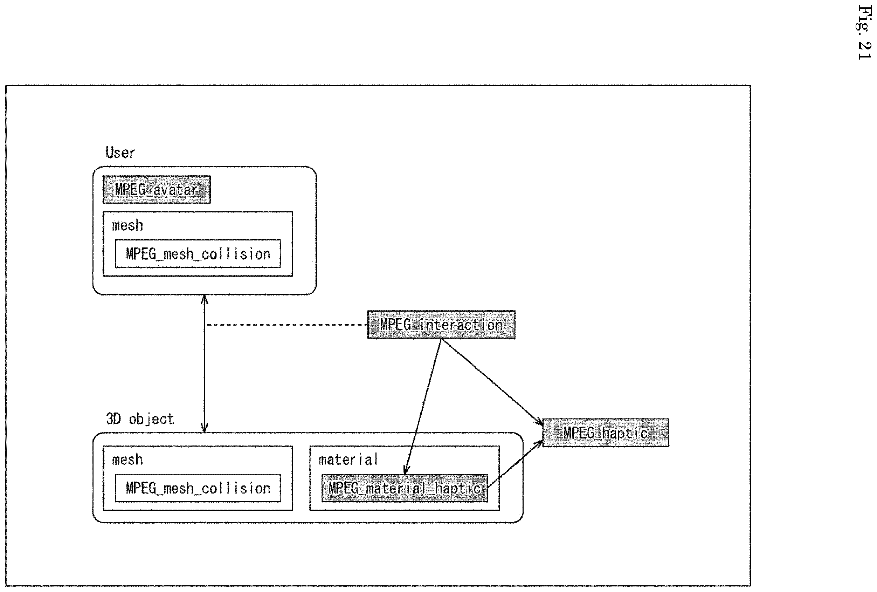

   Fig. 21 is a diagram illustrating an example of how haptics media is reproduced.
[Fig. 22]

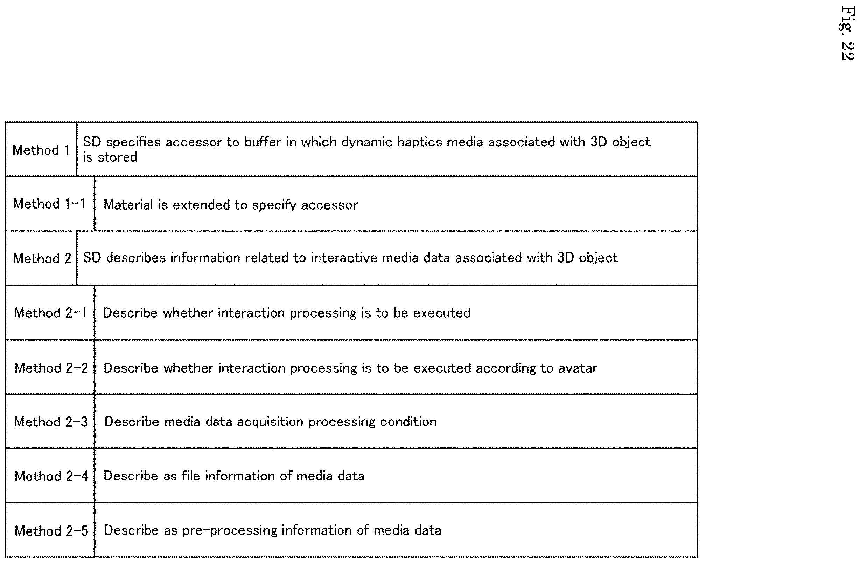

   Fig. 22 is a diagram illustrating an example of extending scene descriptions for handling haptics media.
[Fig. 23]

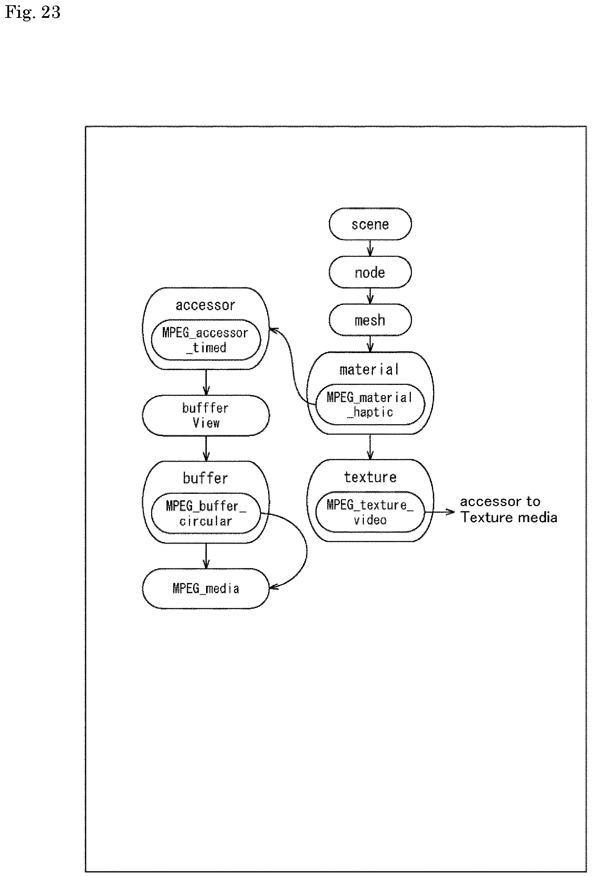

   Fig. 23 is a diagram illustrating an example of specifying an accessor corresponding to a buffer that stores dynamic haptics media.
[Fig. 24]

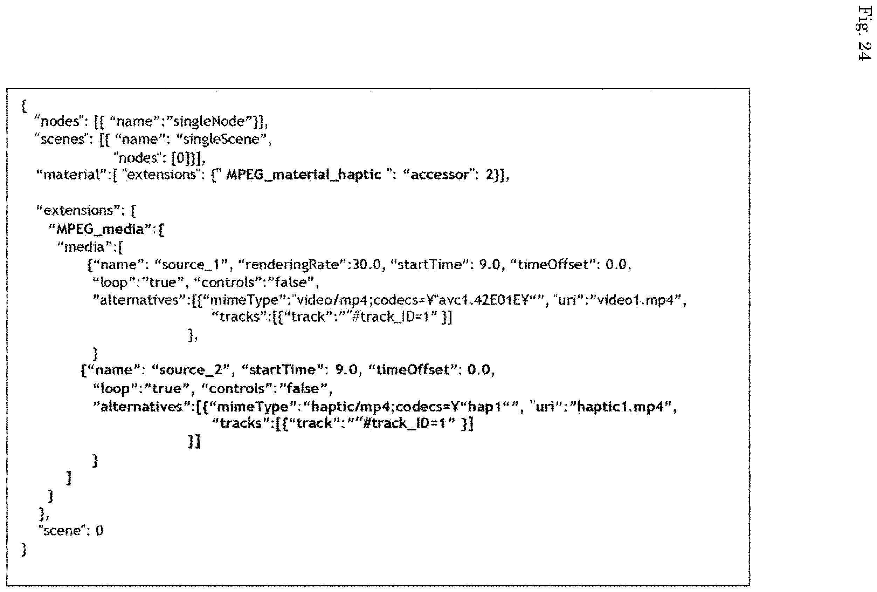

   Fig. 24 is a diagram illustrating a description example of scene description regarding dynamic haptics media.
[Fig. 25]

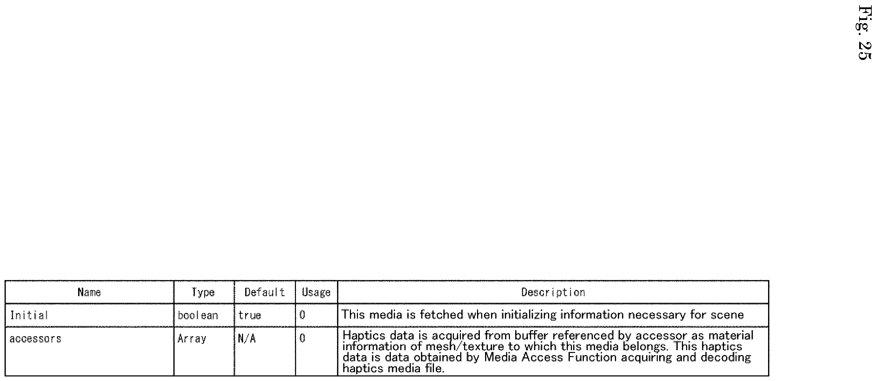

   Fig. 25 is a diagram illustrating an example of element semantics.
[Fig. 26]

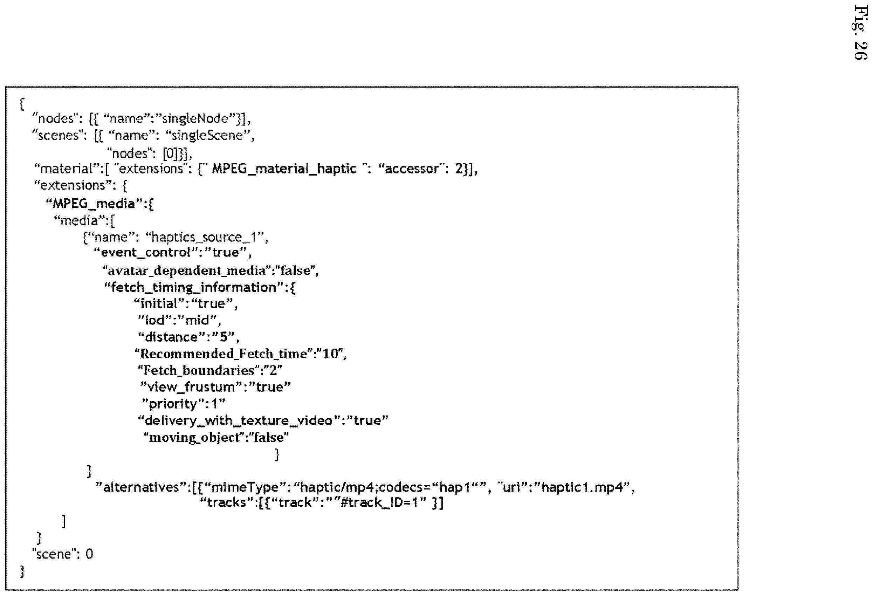

   Fig. 26 is a diagram illustrating a description example of scene description regarding interactive media.
[Fig. 27]

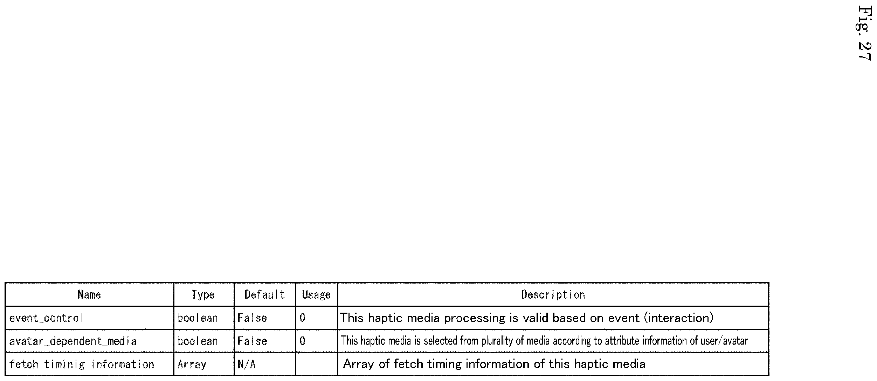

   Fig. 27 is a diagram illustrating an example of element semantics.
[Fig. 28]

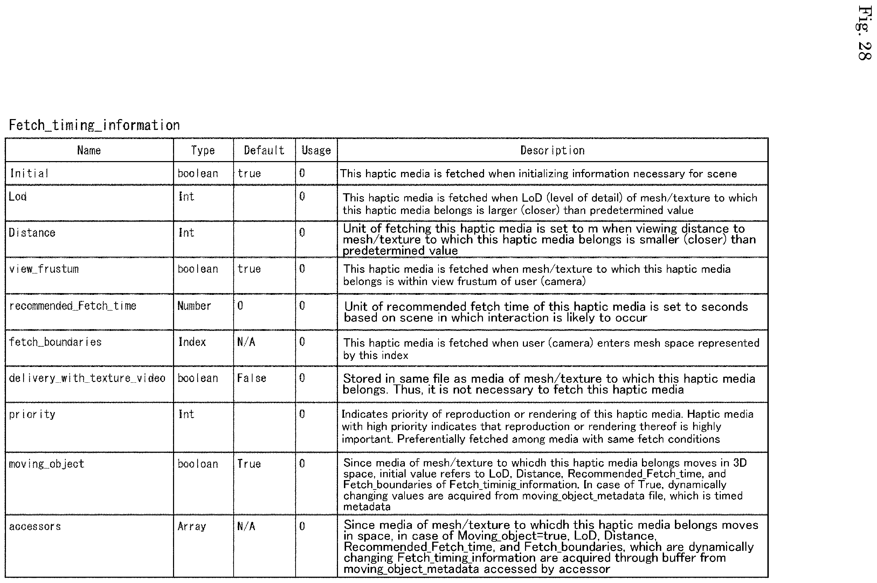

   Fig. 28 is a diagram illustrating an example of element semantics.
[Fig. 29]

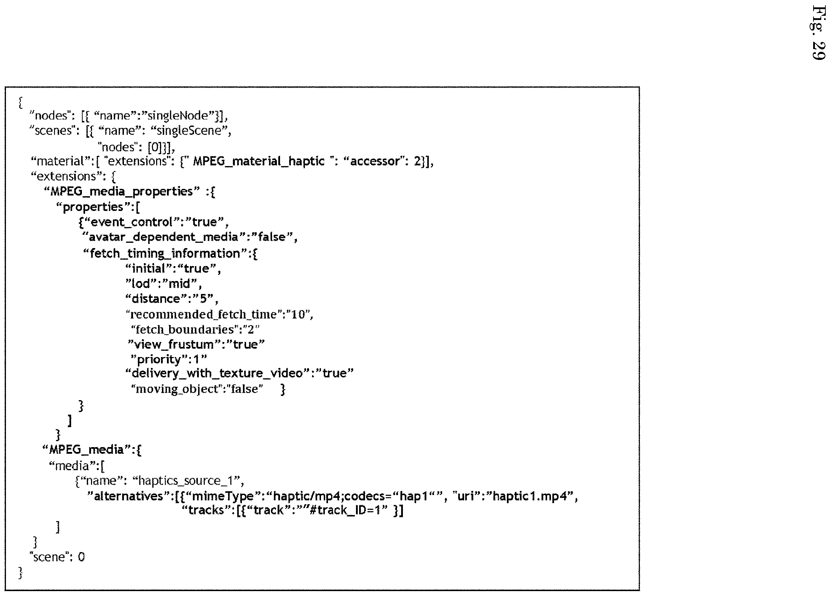

   Fig. 29 is a diagram illustrating a description example of scene description regarding interactive media.
[Fig. 30]

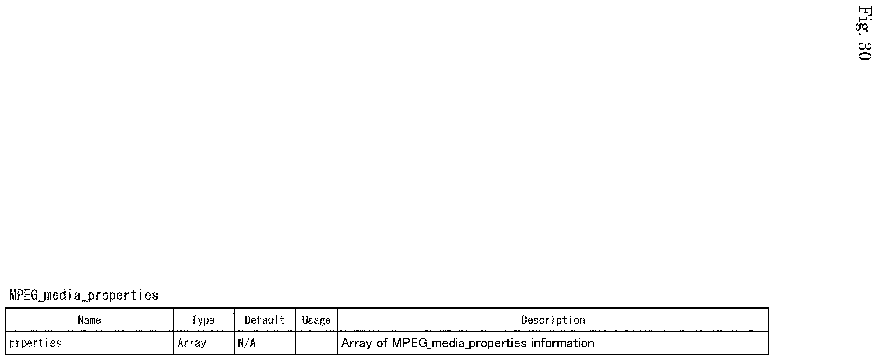

   Fig. 30 is a diagram illustrating an example of element semantics.
[Fig. 31]

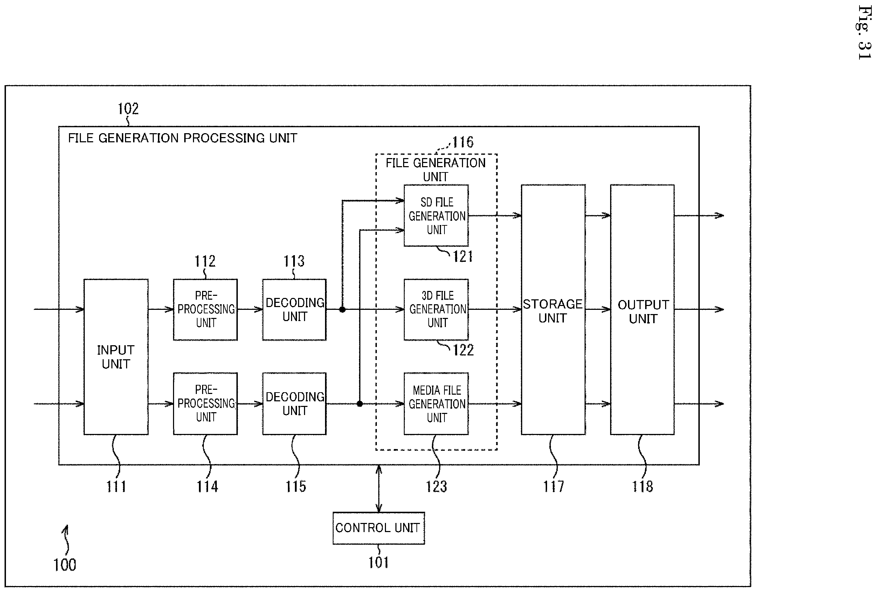

   Fig. 31 is a block diagram illustrating a main configuration example of a file generation device.
[Fig. 32]

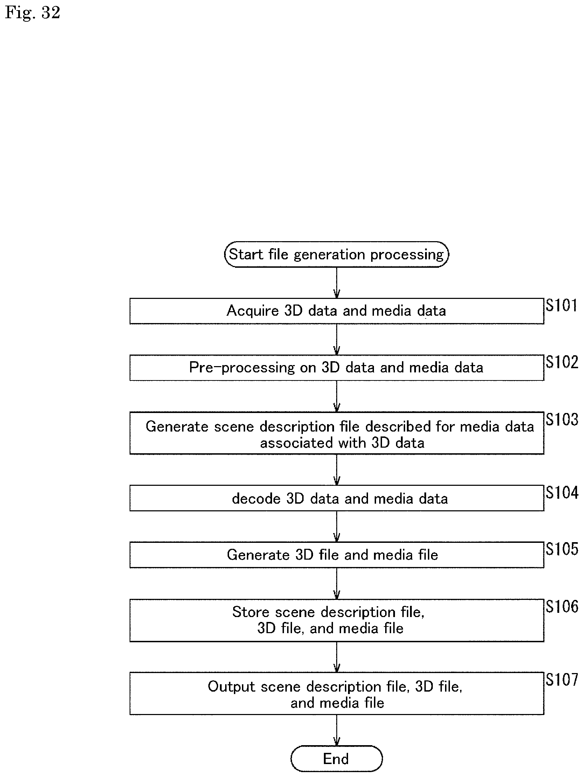

   Fig. 32 is a flowchart illustrating an example of the flow of file generation processing.
[Fig. 33]

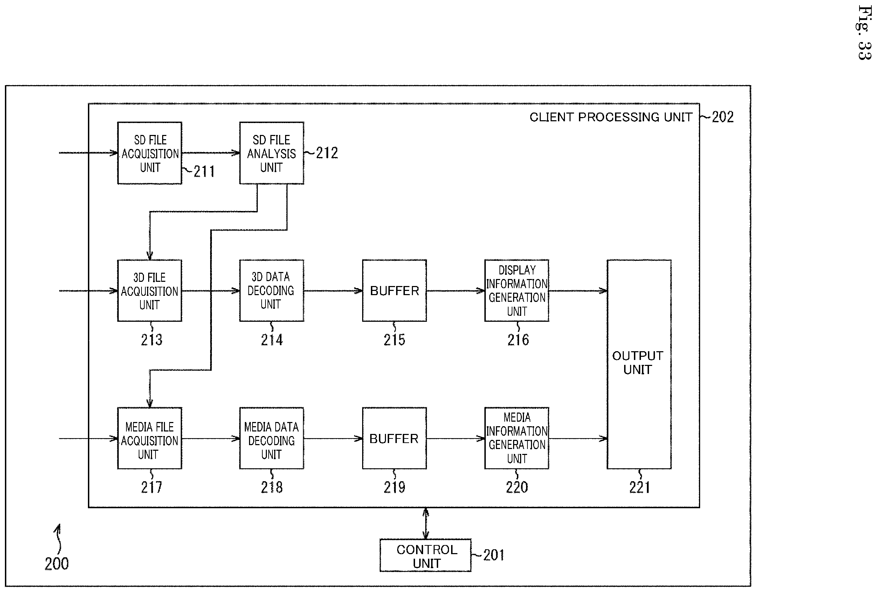

   Fig. 33 is a block diagram illustrating a main configuration example of a client device.
[Fig. 34]

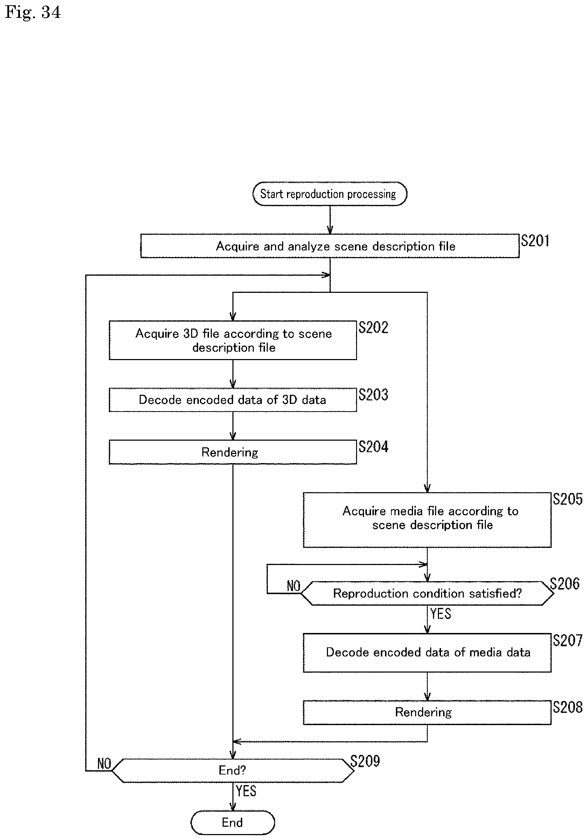

   Fig. 34 is a flowchart illustrating an example of a flow of reproduction processing.
[Fig. 35]

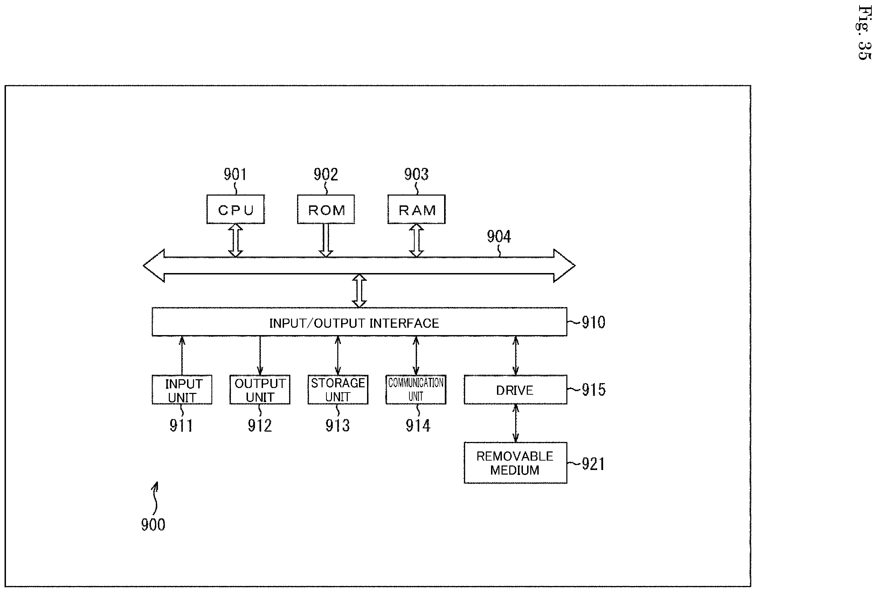

   Fig. 35 is a block diagram illustrating a main configuration example of a computer.

### [Description of Embodiments]

Hereinafter, modes for carrying out the present disclosure (hereinafter referred as embodiments) will be described. The descriptions will be given in the following order.
1. Documents that support technical content and technical terminology
2. MPEG-I scene description
3. Support for dynamic haptics media
4. Support for interactive media
5. First embodiment (file generating device)
6. Second embodiment (client Device)
7. Supplement

### <1. Documents that support technical content and technical terminology>

The scope disclosed in the present technology is not limited to the content described in embodiments and also includes the content described in NPL below and the like that were known at the time of filing and the content of other literature referred to in NPL below.

[NPL 1] (described above)
[NPL 2] (described above)
[NPL 3] (described above)
[NPL 4] (described above)
[NPL 5] (described above)

In other words, the contents in the NPLs and the contents of other literatures referred to in the foregoing NPLs are also grounds for determining support requirements. For example, even if syntax or terms such as glTF2.0 or its extensions described in NPL 1 to NPL 3 are not directly defined in the present disclosure, those items fall within the scope of the present disclosure, and the support requirements for the claims are considered to be satisfied. Similarly, even if technical terms such as "parsing", "syntax", "semantics", and the like, for example, are not directly defined in the present disclosure, those items fall within the scope of the present disclosure, and the support requirements for the claims are considered to be satisfied.

### <2. MPEG-I scene description>

### <gltf2.0>

There has thus far been glTF (GL Transmission Format) (registered trademark) 2.0, which is a format for placing three-dimensional (3D) objects in three-dimensional space, as described in NPL 1, for example. In glTF2.0, a file is constituted by a JSON format file (.glTF), a binary file (.bin), and an image file (.png, .jpg, or the like), as illustrated in Fig. 1, for example. The binary file stores binary data such as geometry and animations. The image file stores data such as textures and the like.

The JSON format file is a scene description file described in JSON (JavaScript (registered trademark) Object Notation). A "scene description" is metadata in which (a description of) a scene of 3D content is described. The scene description defines what kind of scene the scene is. The scene description file is a file storing such scene description. In the present disclosure, the scene description file may also be called a "scene description file".

The description of a JSON format file is constituted by a sequence of pair of keys and values. The following is an example of the format.

### "KEY":" VALUE"

The key is constituted by a character sequence. The value is constituted by a number sequence, a character sequence, a Boolean value, an array, an object, null, or the like.

In addition, it is possible to integrate a pair of a plurality of keys and values ("KEY": "VALUE") by using {} (curly brackets). The content within such curly brackets is also called a JSON object. The following is an example of the format. "user":{"id":1, "name":"tanaka"}

In the case of this example, as a value corresponding to the key (user), a JSON object obtained by integrating a pair of "id":1 and a pair of "name":"tanaka" is defined.

Zero or more values can also be arrayed using [ ] (square brackets). This array is also called a "JSON array". For example, a JSON object can be applied as an element of this JSON array. The following is an example of the format. test":["hoge", "fuga", "bar"]"users":[{"id":1, "name":"tanaka"},{"id":2,"name":"yamada"},{"id":3,"name":"sato"}]

The glTF objects that can be described at the top level of a JSON format file and the reference relationships thereof are illustrated in Fig. 2. The ovals in the tree structure illustrated in Fig. 2 indicate the objects, and the arrows between the objects indicate the reference relationships. As illustrated in Fig. 2, objects such as "scene", "node", "mesh", "camera", "skin", "material", and "texture" are described at the top level of the JSON format file.

An example of the content of such a JSON format file (scene description) is illustrated in Fig. 3. A JSON format file 20 in Fig. 3 illustrates an example of part of the description of the top level. In this JSON format file 20, all of top-level objects 21 used are described at the top level. These top-level objects 21 are the glTF objects illustrated in Fig. 2. Additionally, in the JSON format file 20, reference relationships between the objects are indicated by an arrow 22. More specifically, the reference relationship is indicated by specifying an index of the elements of the array of the referenced object in the properties of the object at the higher level.

Fig. 4 is a diagram illustrating a method for accessing binary data. As illustrated in Fig. 4, binary data is stored in a buffer object. In other words, information for accessing binary data in the buffer object (e.g., a Uniform Resource Identifier (URI) or the like) is indicated. In a JSON format file, objects such as mesh, camera, skin, or the like can access a buffer object via an accessor object and a bufferView object thereof, as illustrated in Fig. 4.

In other words, in objects such as mesh, camera, and skin, the accessor object to be referenced is specified. A description example of a mesh object (mesh) in a JSON format file is illustrated in Fig. 5. For example, as illustrated in Fig. 5, in a mesh object, vertex attributes such as NORMAL, POSITION, TANGENT, and TEXCORD_0 are defined as keys, and for each attribute, the accessor object to be referenced is specified as a value.

A relationship among buffer objects, bufferView objects, and accessor objects is illustrated in Fig. 6. Additionally, a description example of these objects in the JSON format file is illustrated in Fig. 7.

In Fig. 6, a buffer object 41 is an object that stores information for accessing binary data, which is real data (a URI or the like), and information indicating the data length (e.g., the byte length) of the binary data. A of Fig. 7 indicates an example of the content of the buffer object 41. The ""bytelength":102040" in A of Fig. 7 indicates that the byte length of the buffer object 41, as illustrated in Fig. 6, is 102040 bytes. Additionally, the ""uri":"duck.bin"" in A of Fig. 7 indicates that the URI of the buffer object 41, as illustrated in Fig. 6, is "duck.bin".

In Fig. 6, a bufferView object 42 is an object storing information (that is, information regarding a partial area of the buffer object 41) regarding a subset area of binary data specified in the buffer object 41. B of Fig. 7 illustrates a description example of the bufferView object 42. As illustrated in Fig. 6 and B of Fig. 7, the bufferView object 42 stores information such as identification information of the buffer object 41 to which the bufferView object 42 belongs, an offset (for example, a byte offset) indicating the position of the bufferView object 42 inside of the buffer object 41, and a length (for example, a byte length) indicating the data length (for example, a byte length) of the bufferView object 42.

As illustrated in B of Fig. 7, when a plurality of bufferView objects is present, the information is described for each bufferView object (that is, for each subset area). For example, information such as ""buffer":0", ""bytelength":25272", ""byteOffset":0", and the like indicated at the top in B of Fig. 7 is the information of the first bufferView object 42 (bufferView[0]) indicated within the buffer object 41 in Fig. 6. Additionally, information such as ""buffer":0", ""bytelength":76768", ""byteOffset":25272", and the like indicated at the bottom in B of Fig. 7 is the information of the second bufferView object 42 (bufferView[1]) indicated within the buffer object 41 in Fig. 6.

The ""buffer":0" of the first bufferView object 42 (bufferView[0]), indicated in B of Fig. 7, indicates that the identification information of the buffer object 41 to which that bufferView object 42 (bufferView[0]) belongs is "0" (Buffer[0]), as indicated in Fig. 6. The ""bytelength":25272" indicates that the byte length of that bufferView object 42 (bufferView[0]) is 25272 bytes. Furthermore, the ""byteOffset":0" indicates that the byte offset of that bufferView object 42 (bufferView[0]) is 0 bytes.

The ""buffer":0" of the second bufferView object 42 (bufferView[1]), indicated in B of Fig. 7, indicates that the identification information of the buffer object 41 to which that bufferView object 42 (bufferView[0]) belongs is "0" (Buffer[0]), as illustrated in Fig. 6. The ""bytelength":76768" indicates that the byte length of that bufferView object 42 (bufferView[0]) is 76768 bytes. Furthermore, the ""byteOffset":25272" indicates that the byte offset of that bufferView object 42 (bufferView[0]) is 25272 bytes.

In Fig. 6, an accessor object 43 is an object storing information regarding a method of interpreting data of the bufferView object 42. C of Fig. 7 illustrates a description example of the accessor object 43. As illustrated in Fig. 6 and C of Fig. 7, the accessor object 43 stores information such as identification information of the bufferView object 42 to which the accessor object 43 belongs to, an offset (for example, a byte offset) indicating the position of the bufferView object 42 in the buffer object 41, a component type of the bufferView object 42, the number of pieces of data stored in the bufferView object 42, and the type of data stored in the bufferView object 42, for example. This information is described for each bufferView object.

In the example of C of Fig. 7, information such as ""bufferView":0", ""byteOffset":0", ""componentType":5126", ""count":2106", and ""type":"VEC3" is illustrated. The ""bufferView":0" indicates that the identification information of the bufferView object 42 to which the accessor object 43 is "0" (bufferView[0]), as illustrated in Fig. 6. Additionally, the ""byteOffset":0" indicates that the byte offset of that bufferView object 42 (bufferView[0]) is 0 bytes. Furthermore, the ""componentType":5126" indicates that the component type is a FLOAT type (OpenGL macro constant). The ""count":2106" indicates that there are 2106 pieces of data stored in that bufferView object 42 (bufferView[0]). Furthermore, the ""type":"VEC3"" indicates that (the type of) the data stored in the bufferView object 42 (bufferView[0]) is a three-dimensional vector.

All accesses to data other than images are defined by referring to this accessor object 43 (by specifying an accessor index).

Next, a method of specifying a point cloud 3D object in a scene description (JSON format file) that complies with glTF2.0 will be described. A point cloud is 3D content that represents a three-dimensional structure (three-dimensional object) as a collection of many points. Point cloud data is composed of position information (also referred to as geometry) and attribute information (also referred to as attribute) for each point. The attribute can include any information. For example, the attribute may include color information, reflectance information, and normal line information at each point. Thus, the point cloud has a relatively simple data structure and can represent any stereoscopic structure with sufficient accuracy by using a sufficiently large number of points.

In a case where the point cloud does not change in a time direction (also referred to as "static"), the 3D object is specified by using a mesh.primitives object in glTF2.0. Fig. 8 is a diagram illustrating a configuration example of an object of scene description in a case where the point cloud is static. Fig. 9 is a view illustrating a description example of the scene description.

As illustrated in Fig. 9, the mode of the primitives object is specified as 0, indicating that data is handled as a point in a point cloud. As illustrated in Fig. 8 and Fig. 9, an accessor to a buffer that stores the position information of a point is specified in the POSITION property of the attributes object in mesh.primitives. Similarly, an accessor (accessor) to a buffer that stores color information of a point is specified in the COLOR property of the attributes object. There may be one buffer and one bufferView (data may be stored in one file).

Next, the extension of such a scene description object will be described. Each glTF2.0 object can store newly defined objects in an extension object. Fig. 10 illustrates a description example when defining a newly defined object (ExtensionExample). As illustrated in Fig. 10, when using a newly defined extension, the extension object name (ExtensionExample in the example of Fig. 10) is described in "extensionUsed" and "extensionRequired". This indicates that this extension is an extension that will be used or an extension that is required for loading.

### <Client processing>

Processing by the client device in the MPEG-I Scene Description will be described next. The client device obtains the scene description, obtains the data of a 3D object based on that scene description, and then generates a display image using that scene description, the data of the 3D object, and the like.

As described in NPL 2, a Presentation Engine, a Media Access function, and the like perform the processing in the client device. For example, as illustrated in Fig. 11, a presentation engine 51 of a client device 50 acquires the initial value of a scene description and information for updating the scene description (hereinafter also referred to as update information) and generates a scene description at the time to be processed. Then, the presentation engine 51 analyzes the scene description and specifies the media (video, audio, and the like) to be reproduced. The presentation engine 51 then requests a media access function 52 to acquire the media via a media access API (Application Program Interface). The presentation engine 51 also makes settings for pipeline processing, specifies buffers, and the like.

The media access function 52 obtains various kinds of data of the media requested by the presentation engine 51 from a cloud, a local storage, and the like. The media access function 52 supplies various kinds of data (encoded data) of the acquired media to the pipeline 53.

The pipeline 53 decodes the various types of data (encoded data) in the supplied media through pipeline processing, and supplies the decoding result to a buffer 54. The buffer 54 holds the various types of data in the supplied media.

The presentation engine 51 performs rendering and the like using the various types of data in the medium held in the buffer 54.

### <Application of timed media>

In recent years, extending glTF2.0 in MPEG-I Scene Description and applying timed media as 3D object content as described in NPL 2, for example, have been examined. The timed media is media data that changes in a time axis direction like a video of a two-dimensional image.

glTF was applicable only to still image data as media data (3D object content). In other words, glTF did not support video media data. When moving 3D objects, animation (a method of switching still images along the time axis) was applied.

In MPEG-I Scene Description, applying glTF2.0, applying a JSON format file as scene description, and extending glTF such that timed media (for example, video data) can be handled as media data have been examined. In order to handle timed media, extension is performed as follows, for example.

Fig. 12 is a diagram illustrating an extension for handling timed media. In the example of Fig. 12, an MPEG media object (MPEG_media) is an extension of glTF, and is an object that specifies attributes of MPEG media of video data or the like, such as uri, track, renderingRate, and startTime.

Further, as illustrated in Fig. 12, an MPEG texture video object (MPEG_texture_video) is provided as an extension object (extensions) of a texture object (texture). The MPEG texture video object stores information on the accessor corresponding to the buffer object to be accessed. In other words, the MPEG texture video object is an object that specifies the index of the accessor corresponding to the buffer in which the texture media specified by the MPEG media object (MPEG_media) is decoded and stored.

Fig. 13 is a diagram illustrating a description example of an MPEG media object (MPEG_media) and an MPEG texture video object (MPEG_texture_video) in a scene description, for explaining extension for handling timed media. In the example of Fig. 13, in the second line from the top, an MPEG texture video object (MPEG_texture_video) is set as an extension object (extensions) of the texture object (texture), as illustrated below. The accessor index ("2" in this example) is specified as the value of the MPEG video texture object.

"texture":[{"sampler":0, "source":1, "extensions":{"MPEG_texture_video ":"accessor":2}}],
In addition, in the case of the example in Fig. 13, an MPEG media object (MPEG_media) is set as an extension object (extensions) of glTF as follows in the seventh to sixteenth rows from the top. Additionally, various kinds of information regarding the MPEG media object such as an encoding, a URI, and the like of the MPEG media object, for example, is stored as values of the MPEG media object.

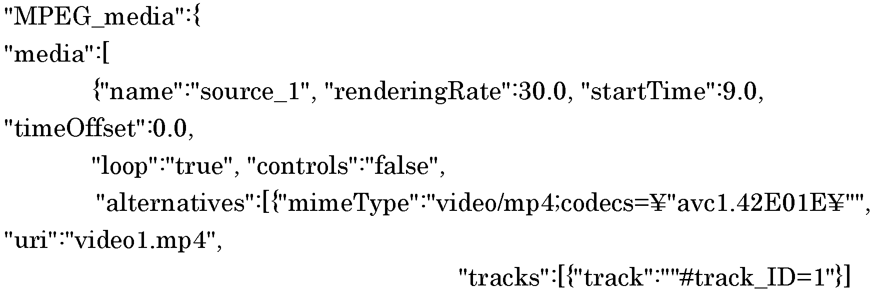

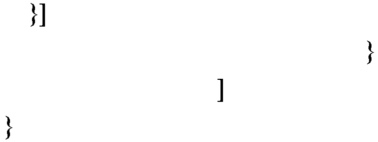

In addition, each frame data is decoded and sequentially stored in a buffer, but since its position changes, a scene description is provided with a mechanism to store the changing information so that a renderer can read the data. For example, as illustrated in Fig. 12, an MPEG buffer circular object (MPEG_buffer_circular) is provided as an extension object (extensions) of a buffer object (buffer). The MPEG buffer circular object stores information for dynamically storing data within a buffer object. For example, information such as information indicating the data length of the buffer header (bufferHeader) and information indicating the number of frames is stored in this MPEG buffer circular object. Note that the buffer header stores information such as, for example, an index and a timestamp and data length of the frame data to be stored.

Further, as illustrated in Fig. 12, an MPEG accessor timed object (MPEG_timed_accessor) is provided as an extension object (extensions) of an accessor object (accessor). In this case, since the media data is a moving image, the bufferView object (bufferView) to be referenced in the time direction may change (the position may vary). Therefore, information indicating the referenced bufferView object is stored in this MPEG accessor timed object. For example, an MPEG accessor timed object stores information indicating a reference to a bufferView object (bufferView) in which a timedAccessor information header is described. Note that the timed accessor information header is, for example, header information storing an accessor object that dynamically changes and information in the bufferView object.

Fig. 14 is a diagram illustrating a description example of an MPEG buffer circular object (MPEG_buffer_circular) and an MPEG accessor timed object (MPEG_accessor_timed) in a scene description, for explaining extension for handling timed media. In the example of Fig. 14, in the fifth line from the top, an MPEG accessor timed object (MPEG_accessor_timed) is set as an extension object (extensions) of the accessor object (accessors), as illustrated below. Parameters and their values, such as the index of the bufferView object (in this example, "1"), an update rate (updateRate), and immutable information (immutable), are specified as the value of the MPEG accessor timed object.

"MPEG_accessor_timed":{"bufferView":1, "updateRate":25.0, "immutable":1,"}

Further, in the case of the example illustrated in Fig. 14, in the 13th line from the top, an MPEG buffer circular object (MPEG_buffer_circular) is set as an extension object (extensions) of the buffer object (buffer), as illustrated below. Parameters such as a buffer frame count (count), a header length (headerLength), and an update rate (updataRate) and their values are specified as the value of the MPEG buffer circular object.

"MPEG_buffer_circular":{"count":5, "headerLength":12, "updateRate":25.0}

Fig. 15 is a diagram for explaining extension to handle timed media. Fig. 15 illustrates an example of a relationship among an MPEG accessor timed object, an MPEG buffer circular object, an accessor object, a bufferView object, and a buffer object.

As mentioned above, the MPEG buffer circular object of the buffer object stores information necessary for storing time-varying data in the buffer area indicated by the buffer object, such as a buffer frame count (count), a header length (headerLength), and an update rate (updataRate). Further, parameters such as an index (idex), a timestamp (timestamp), and a data length (length) are stored in a buffer header (bufferHeader) that is a header of the buffer area.

As mentioned above, the MPEG accessor timed object of the accessor object stores information about the referenced bufferView object, such as a bufferView object index (bufferView), an update rate (updataRate), and immutable information (immutable). Additionally, this MPEG accessor timed object stores information regarding the bufferView object in which the timed accessor information header to be referenced is stored. A timestamp delta (timestamp_delta), update data of an accessor object, update data of a bufferView object, and the like can be stored in the timed accessor information header.

### <Client processing during utilization of MPEG_texture_video>

The scene description is spatial arrangement information for arranging one or more 3D objects in a 3D space. The content of the scene description can be updated along the time axis. In other words, the arrangement of the 3D objects can be updated over time. The client processing performed by the client device at that time will be described.

Fig. 16 illustrates a main configuration example of the client device regarding client processing, and Fig. 17 is a flowchart illustrating an example of the flow of the client processing. As illustrated in Fig. 16, the client device includes a PresentationEngine (hereinafter also referred to as PE) 51, a media access function (MediaAccessFuncon (hereinafter also referred to as MAF)) 52, a pipeline (Pipeline) 53, and a buffer (Buffer) 54. The presentation engine (PE) 51 includes a glTF analysis unit 63 and a rendering processing unit 64.

The presentation engine (PE) 51 causes the media access function 52 to acquire media, acquires the data via the buffer 54, and performs processing related to display. Specifically, for example, processing is performed in the following flow.

When client processing is started, the glTF analysis unit 63 of the presentation engine (PE) 51 starts PE processing as in the example of Fig. 17, acquires the SD (glTF) file 62 which is a scene description file in step S21, and parses the scene description.

In step S22, the glTF analysis unit 63 checks media linked with the 3D object (texture), a buffer storing the medium after the processing, and an accessor. In step S23, the glTF analysis unit 63 notifies the media access function 52 of the information as a file obtainment request.

The media access function (MAF) 52 starts MAF processing as in the example of Fig. 17, and acquires the notification in step S11. In step S12, the media access function 52 acquires the media (3D object file (mp4)) based on the notification.

In step S13, the media access function 52 decodes the acquired media (3D object file (mp4)). In step S14, the media access function 52 stores the decoded media data in the buffer 54 based on the notification from the presentation engine (PE51).

In step S24, the rendering processing unit 64 of the presentation engine 51 reads (obtains) the data from the buffer 54 at an appropriate timing. In step S25, the rendering processing unit 64 performs rendering by using the acquired data and generates a display image.

The media access function 52 executes the processing at each clock time (each frame) by repeating the processing in steps S13 and S14. In addition, the rendering processing unit 64 of the presentation engine 51 executes the processing at each clock time (each frame) by repeating the processing in steps S24 and S25. Once the processing for all the frames ends, the media access function 52 ends the MAF processing, and the presentation engine 51 ends the PE processing. In other words, the client processing ends.

### <Haptics media>

By the way, as described in NPL 3, standardization of technologies for encoding and transmitting haptics information (also called haptics media) in addition to audio and video media, which are the constituent elements of 2D video content and 3DoF (Degree of Freedom)/6DoF video content has begun. Haptics media is information that expresses virtual sensations using, for example, vibration. Haptics media, for example, is used in association with 3D data, which is information representing a three-dimensional space. 3D data includes, for example, content that expresses the three-dimensional shape of a 3D object placed in a three-dimensional space (e.g., mesh and point cloud), and video content or audio content (e.g., video and audio 6DoF content) that is developed in a three-dimensional space.

Note that the media associated with 3D data may be any kind of information and is not limited to this haptics media. For example, images, sounds, and the like may be included in this media. Media associated with 3D data (e.g., images, sounds, and vibrations) include synchronous media that is reproduced in synchronization with the progress (change) of a scene (state of a three-dimensional space) in the time direction, and interactive media that is reproduced when a predetermined condition is satisfied in a scene due to a user operation or the like (that is, reproduced in response to a predetermined event). Haptics media of synchronous media is also referred to as synchronous haptics media. Further, haptics media of interactive media is also referred to as interactive haptics media. Synchronous haptics media is, for example, vibrations that occur, when the wind blows or a 3D object moves, according to the state thereof (to express the changes in the scene). Interactive haptics media is, for example, vibrations that occur to express the sensation when a user's avatar touches a 3D object, when the avatar moves a 3D object, or when the avatar collides with a 3D object. Naturally, these are examples of haptics media, and haptics media is not limited to these examples.

Further, media associated with 3D data includes media that can change in the time direction and media that does not change.

The "media that can change in the time direction" may include, for example, media whose reproduction content (actions) can change in the time direction. The "media whose reproduction content can change in the time direction" may include, for example, moving images, long-term audio information, vibration information, and the like. In addition, the "media whose reproduction content can change in the time direction" may include, for example, media that is reproduced only during a predetermined time period, and media whose content is reproduced according to the time (for example, media whose images displayed, sound reproduced, vibration method, and the like changes according to the time). Furthermore, the "media that can change in the time direction" may include, for example, media whose linked reproduction conditions (events) can change in the time direction. The "media whose linked reproduction conditions can change in the time direction" may include, for example, media in which the content of the event, such as touching, pushing, or knocking down, can change in the time direction. Further, the "media whose linked reproduction conditions can change in the time direction" may include, for example, media in which the position at which an event occurs can change in the time direction. For example, media that is reproduced when the right side of the object is touched at time T1, and that is reproduced when the left side of the object is touched at time T2 may be included. Naturally, any media may be used as long as it changes in the time direction, and is not limited to these examples. On the other hand, the "media that does not change in the time direction" may include, for example, media in which the reproduction content (action) does not change in the time direction (media in which the action is the same at any time). In addition, the "media that does not change in the time direction" includes, for example, media whose linked reproduction conditions (events) do not change in the time direction (media where the event content and event location are the same at any time). In this specification, the ability to change in the time direction is also referred to as "dynamic." For example, media that can change in the time direction (timed media) is also referred to as dynamic media. For example, haptics media that can change in the time direction is also referred to as dynamic haptics media. In addition, not changing in the time direction is also referred to as "static." For example, media that does not change in the time direction is also referred to as static media. For example, haptics media that does not change in the time direction is also referred to as static haptics media.

NPL 3 proposes a method for encoding such haptics media. In this method, haptics signals (wav) and haptics signal descriptions (ivs, ahap) are encoded using the architecture illustrated in the upper part of Fig. 18 to generate an interchange format (gmap) and a distribution format (mpg). The table at the lower part of Fig. 18 illustrates an example of the configuration of the distribution format. As illustrated in this table, the haptics media bitstream is composed of a binary header and a binary body. The binary header stores information on the characteristics of the encoded data (Haptics stream) of the haptics media, the rendering device, the encoding method, and the like. Further, the binary body stores encoded data of haptics media (Haptics stream).

Furthermore, as described in NPL 4, a basic function for storing a bitstream in which the haptics media is encoded in ISOBMFF (International Organization for Standardization Base Media File Format) has been created. Fig. 19 is a diagram illustrating an example of extending ISOBMFF for storing the haptics media. In NPL 4, a media type 'hapt' is defined to store haptics media. Additionally, a haptics sample entry (HapticsSampleEntry) is prepared as a media information box. However, the internal structure of the haptics sample entry is not defined.

In addition, as described in NPL 5, in parallel with the standardization of haptics media encoding and transmission technology, studies have begun to search for a technology for handling haptics media using MPEG-I Scene Description. In NPL 5, to support haptic media in scene descriptions, four gLTF extensions were proposed: MPEG_haptic, MPEG_material_haptic, MPEG_avatar, and MPEG_interaction, as illustrated in Fig. 20.

MPEG_haptic is information (for example, link information) for referring to haptics media data (also referred to as haptics data) referenced from the scene description. This haptics data exists as independent data, similarly to data such as audio and images. Further, this haptics data may be encoded (or may be encoded data).

MPEG_material_haptic, which is a mesh/material extension of an already defined 3D object, defines haptics material information (which haptics media is associated with where in the 3D object (mesh), and the like). This material information defines static haptics media information. Furthermore, information for accessing MPEG_haptic (for example, link information, and the like) can also be defined in this haptics material information.

MPEG_avatar defines a 3D shape (avatar) of a user that moves in a three-dimensional space. MPEG_interaction lists the conditions that the avatar (user) can perform (what the user can do) and the possible actions (how the object reacts). For example, MPEG_interaction defines the interaction (i.e., event) that occurs between the user (MPEG_avatar) and the 3D object, and the actions that occur as a result (e.g., when the user touches the 3D object, a vibration occurs).

An example of how to reproduce haptics media using these extensions of scene descriptions is illustrated in Fig. 21. For example, when the avatar defined in MPEG_avatar generates an interaction (event) defined in MPEG_interaction, static haptics media corresponding to the location or the like where the interaction occurred is generated and reproduced according to the material information in MPEG_materal_haptics so that an action corresponding to that interaction is triggered (e.g., vibrations output by a vibration device are rendered). Alternatively, the haptics data referenced by MPEG_haptics illustrated in MPEG_materal_haptics is readed, and dynamic haptics media is generated and reproduced.

However, studies to search for a technology for handling media data associated with 3D data such as haptics media with scene descriptions have just begun, and there are still some media data that cannot be handled correctly with scene descriptions. Therefore, there was a risk that the reproduction performance of media data associated with 3D data would be reduced.

### <3. Support for dynamic haptics media>

### <Use of PE/MAF>

For example, as in the example above, it is conceivable to reproduce dynamic haptics media using MPEG _haptic. However, MPEG_haptics did not have a definition regarding MAF (Fig. 16 and the like). In addition, only static information can be described in material properties. Therefore, MPEG_materal_haptics could not handle timed metadata (Timed media). In other words, it was difficult to reproduce dynamic haptics media using client processing (using MAF or PE) as described in NPL 2. Therefore, there was a risk that the reproduction performance of media data associated with 3D data would be reduced.

### <Method 1>

Therefore, as illustrated at the top of the table in Fig. 22, the scene description (SD) specifies an accessor to the buffer in which dynamic haptics media associated with 3D data is stored (Method 1). In other words, a scene description including such a specification is generated on the encoding side and provided to the decoding side. Then, on the decoding side, dynamic haptics media is acquired on the basis of the scene description and stored in a buffer corresponding to the specified accessor.

For example, an information processing device that generates a scene description file and the like (hereinafter also referred to as a first information processing device) includes a file generation unit that generates a scene description file that specifies an accessor for storing dynamic haptics media associated with 3D data in a predetermined storage area. In addition, an information processing method for generating a scene description file and the like (hereinafter also referred to as a first information processing method) includes generating a scene description file that specifies an accessor for storing dynamic haptics media associated with 3D data in a predetermined storage area.

For example, an information processing device that reproduces media associated with 3D data (hereinafter also referred to as a second information processing device) includes an acquisition unit that acquires encoded data of dynamic haptics media associated with 3D data to be reproduced on the basis of a description of a scene description file, a decoding unit that decodes the encoded data and generates haptics media data based on the description of the scene description file, a storage unit that stores the haptics media data in a storage area corresponding to an accessor specified by the scene description file, and a generation unit that reads the haptics media data stored in the storage area based on the description of the scene description file and generates haptics media information for output (i.e., control information that controls the drive of an output unit that outputs haptics media (for example, how a vibration device vibrates). In addition, an information processing method for reproducing media associated with 3D data (hereinafter also referred to as a second information processing method) includes acquiring encoded data of dynamic haptics media associated with 3D data to be reproduced on the basis of a description of a scene description file, decoding the encoded data and generating haptics media data based on the description of the scene description file, storing the haptics media data in a storage area corresponding to an accessor specified by the scene description file, and reading the haptics media data stored in the storage area based on the description of the scene description file and generating haptics media information for output.

By doing so, the second information processing device can reproduce dynamic haptics media using client processing using MAF and PE. In other words, the first information processing device can enable the second information processing device to reproduce dynamic haptics media using client processing using MAF or PE. In other words, it is possible to suppress a reduction in reproduction performance of media data associated with 3D data.

Note that this dynamic haptics media may include synchronous haptics media that is reproduced in synchronization with the progress of the scene in the time direction. In other words, the generation unit of the second information processing device may read the data of this synchronous haptics media from the storage area corresponding to the accessor specified by the scene description file at a timing corresponding to a predetermined reproduction timing and generate haptics media information.

Further, this dynamic haptics media may include interactive haptics media that is reproduced when a predetermined condition is satisfied in a scene due to a user operation or the like. In other words, the generation unit of the second information processing device may read the data of this interactive haptics media from the storage area corresponding to the accessor specified by the scene description file when the condition is satisfied and generate the haptics media information.

### <Method 1-1>

In addition, when Method 1 is applied, as illustrated in the second row from the top of the table in Fig. 22, the "material" property may be extended to specify an accessor for storing the dynamic haptics media associated with 3D data in a predetermined storage area (Method 1-1). That is, the accessor specification in Method 1 may be performed anywhere in the scene description, but may be performed, for example, in the "material" property defined as material information of texture.

For example, the file generation unit of the first information processing device may generate a scene description file that specifies an accessor for storing dynamic haptics media associated with 3D data in a predetermined storage area (buffer) in the "material" property. In other words, the storage unit of the second information processing device may store dynamic haptics media data associated with 3D data in a storage area corresponding to an accessor specified in the "material" property (the accessor for storing the dynamic haptics media associated with 3D data in a predetermined storage area (buffer)).

For example, as illustrated in Fig. 23, the accessor may be specified in MPEG_material_haptics defined in material as in Method 1. In other words, MPEG_material_haptics may be extended and attributes specified for handling timed metadata may be defined. A description example of a scene description in that case is illustrated in Fig. 24.

As illustrated in Fig. 24, in MPEG_media (glTF extension), an accessor (source_2) corresponding to a predetermined buffer is specified, and attributes of the dynamic haptics media to be stored are specified there (e.g., "mimeType":" video/mp4;codecs=¥"avc1.42E01E¥"", "uri":"video1.mp4", or "tracks":[{"track":""#track_ID=1"). In addition, in MPEG_material_haptics, the index of the accessor corresponding to the buffer in which the haptics media specified in MPEG_media is stored is specified ("accessor": 2). Note that Fig. 25 illustrates an example of the semantics of elements included in this description.

On the basis of such a description, the PE can refer to MPEG_media (dynamic haptics media data) stored in the buffer from the material (MPEG_material_haptics) via the accessor, as illustrated in Fig. 23. In other words, MAF can store the MPEG_media in the buffer based on such a description. Therefore, the second information processing device can reproduce media data associated with 3D data using PE and MAF. In other words, it is possible to suppress a reduction in reproduction performance of media data associated with 3D data.

### <4. Support for interactive media>

### interaction processing>

For example, in the case of interactive media, when an interaction (event) occurs, the client device acquires the file of the media and decodes the data. However, when media files are acquired at the timing when an interaction occurs in this way, there was a risk that delays would occur, at least in the time required for file acquisition protocols (for example, acquisition from a server using HTTP (HyperText Transfer Protocol)) and the time required for feedback. Therefore, it has been difficult to reproduce such media at the correct timing. In other words, there was a risk that the reproduction performance of media data associated with 3D data would be reduced.

### <Method 2>

Therefore, as illustrated in the third row from the top of the table in Fig. 22, information regarding interactive media associated with 3D data is described in the scene description (SD) (Method 2). In other words, a scene description including such information is generated on the encoding side and provided to the decoding side. Then, on the decoding side, on the basis of the scene description information, encoded data of the interactive media is acquired (before the occurrence of a predetermined interaction (event)) and decoded.

For example, the first information processing device includes a file generation unit that generates a scene description file that includes a description of interactive media associated with 3D data. Furthermore, the first information processing method includes generating a scene description file that includes a description of interactive media associated with 3D data.

For example, the second information processing device includes an acquisition unit that acquires encoded data of interactive media associated with 3D data to be reproduced on the basis of a description of interactive media included in a scene description file, and a decoding unit that decodes the acquired encoded data based on the description of the scene description file and generates interactive media data. Furthermore, the second information processing method includes acquiring encoded data of interactive media associated with 3D data to be reproduced on the basis of a description of interactive media included in a scene description file, and decoding the acquired encoded data based on the description of the scene description file and generating interactive media data.

By doing so, it is possible to control the acquisition of interactive media data by the second information processing device using the scene description. In other words, the first information processing device can control the second information processing device to acquire interactive media data using the scene description. For example, the first information processing device can cause the second information processing device to acquire the interactive media data at a timing (in advance) at which the above-described reproduction delay does not occur. Further, the second information processing device can acquire the interactive media data at a timing (in advance) at which the above-described reproduction delay does not occur. In other words, it is possible to suppress a reduction in reproduction performance of media data associated with 3D data.

Note that this interactive media may be any media as long as it executes processing when a predetermined condition is satisfied in a scene due to a user operation or the like. For example, this interactive media may include haptics information. This interactive media may also include image information. Additionally, this interactive media may include audio information. Naturally, interactive media is not limited to these examples.

### <Method 2-1>

Furthermore, when Method 2 is applied, as illustrated in the fourth row from the top of the table in Fig. 22, whether or not interaction processing is to be executed may be described in the scene description (Method 2-1). For example, the description regarding interactive media included in the above-mentioned scene description file may include a description indicating whether or not interactive processing that is executed when a predetermined condition is satisfied in the scene due to a user operation or the like is possible. For example, if the description indicates that interactive processing is possible, the acquisition unit of the second information processing device may acquire encoded data of interactive media.

Fig. 26 is a diagram illustrating a description example of scene description when Method 2 described above is applied. Further, Fig. 27 is a diagram illustrating an example of the semantics of elements included in the description. As illustrated in Fig. 26, "event_control" is defined in MPEG_media. As illustrated in Fig. 27, event_control is flag information indicating whether or not the haptics media reproduction processing is valid on the basis of the event (interaction). For example, when event_control is set to true, it indicates that processing based on the event can be executed, that is, the media being handled is interactive media.

With such a description, it is possible to clearly indicate to the second information processing device that the description is related to interactive media. Therefore, the second information processing device can identify the description regarding the interactive media and acquire the data of the interactive media based on the description. For example, based on the description, the second information processing device can acquire data of the interactive media at a timing (in advance) at which the above-described reproduction delay does not occur. In other words, the first information processing device can control the second information processing device to acquire the data of the interactive media using the description regarding the interactive media. For example, the first information processing device can cause the second information processing device to acquire the data of the interactive media at a timing (in advance) at which the above-described reproduction delay does not occur, based on the description. In other words, it is possible to suppress a reduction in reproduction performance of media data associated with 3D data.

### <Method 2-2>

In addition, when Method 2 is applied, as illustrated in the fifth row from the top of the table in Fig. 22, whether or not interaction processing is to be executed according to the avatar may be described in the scene description (Method 2-2). For example, the description regarding interactive media included in the above-described scene description file may include a description indicating whether or not the interactive media can be selected according to a user operation or avatar attribute information. For example, if the description regarding interactive media included in the scene description file described above indicates that interactive media can be selected, the acquisition unit of the second information processing device may select interactive media depending on a user operation or avatar attribute information. Further, if the description regarding interactive media included in the scene description file described above indicates that interactive media cannot be selected, the acquisition unit of the second information processing device may select predetermined interactive media.

As illustrated in Fig. 26, "avatar_dependent_media" is defined in MPEG_media. As illustrated in Fig. 27, avatar_dependent_media is flag information indicating whether or not it is possible to select the interactive media to be applied from a plurality of media according to a user operation or avatar attribute information. For example, when avatar_dependent_media is set to true, it indicates that the interactive media to be applied can be selected from a plurality of media according to a user operation or avatar attribute information. In other words, it is illustrated that a plurality of interactive media that can be selected according to the user or avatar are prepared.

Therefore, the second information processing device can select interactive media based on such a description. In other words, the first information processing device can cause the second information processing device to select such interactive media. In this way, it is possible to reproduce more diverse media. In other words, it is possible to suppress a reduction in reproduction performance of media data associated with 3D data.

### <Method 2-3>

Furthermore, when Method 2 is applied, media data acquisition processing conditions may be described as illustrated in the sixth row from the top of the table in Fig. 22 (Method 2-3). For example, the description regarding interactive media included in the scene description file described above may include a description regarding acquisition of encoded data of interactive media associated with 3D data to be reproduced. For example, the acquisition unit of the second information processing device may acquire the encoded data according to the description regarding acquisition of the encoded data thereof.

As illustrated in Fig. 26, "fetch_timing_information" is defined in MPEG_media. As illustrated in Fig. 27, fetch_timing_information is a description regarding acquisition of encoded data of interactive media. The second information processing device can acquire the interactive media based on this description. In other words, the first information processing device can control the acquisition of interactive media by the second information processing device in more detail using this description. In other words, it is possible to suppress a reduction in reproduction performance of media data associated with 3D data.

### <fetch_timing_information>

Next, fetch_timing_information, which is a description regarding acquisition of interactive media, will be described. fetch_timing_information may include any information. For example, fetch_timing_information may include a description regarding acquisition conditions. For example, the acquisition unit of the second information processing device may acquire the encoded data of the interactive media when the condition is satisfied.

The second information processing device can acquire the interactive media based on the description regarding the acquisition conditions. In other words, the first information processing device can control the acquisition of interactive media by the second information processing device based on the acquisition conditions using this description.

For example, the description regarding the acquisition condition may include a description indicating whether the condition is "before initialization of information necessary for a scene." For example, if the description indicates that the acquisition condition is "before initialization of information necessary for a scene," the acquisition unit of the second information processing device may acquire the encoded data of the interactive media before initialization of the information.

As illustrated in Fig. 26, "Initial" is defined as fetch_timing_information in MPEG_media. Fig. 28 illustrates an example of the semantics of the elements of fetch_timing_information. As illustrated in Fig. 28, this Initial is flag information indicating whether or not to acquire encoded data of this interactive media when initializing information necessary for a scene. For example, if this Initial is set to true, it indicates that the encoded data of this interactive media will be acquired when initializing the information necessary for a scene.

Therefore, the second information processing device can select whether or not to acquire the encoded data of this interactive media, for example, when initializing information necessary for a scene, according to the setting of this Initial. In other words, the first information processing device can control whether or not the second information processing device acquires the encoded data of this interactive media when initializing information necessary for a scene using this description.

For example, the description regarding the acquisition conditions may include a description indicating the LoD (Level Of Detail) at the position corresponding to the interactive media to be acquired. For example, if the LoD at the position corresponding to the interactive media to be acquired is larger than the LoD indicated by the description, the acquisition unit of the second information processing device may acquire the encoded data of the interactive media.

As illustrated in Fig. 26, "Lod" is defined as fetch_timing_information in MPEG_media. As illustrated in Fig. 28, this Lod is a description indicating acquisition conditions regarding the LoD of encoded data of interactive media. For example, if the LoD at the position corresponding to the interactive media to be acquired is larger than this LoD, the encoded data of the interactive media is acquired.

Therefore, according to the LoD setting, the second information processing device can acquire encoded data of this interactive media, for example, when it is sufficiently close to the position corresponding to the interactive media to be acquired (when the position is displayed larger than the LoD setting). In other words, based on this description, the first information processing device can control the second information processing device to acquire encoded data of the interactive media, for example, when it is sufficiently close to the position corresponding to the interactive media to be acquired (when the position is displayed larger than the LoD setting).

For example, the description regarding the acquisition conditions may include a description indicating the distance to the position corresponding to the interactive media to be acquired. For example, the acquisition unit of the second information processing device may acquire the encoded data of the interactive media when the viewpoint or the avatar approaches the position within a distance indicated by the description.

As illustrated in Fig. 26, "Distance" is defined as fetch_timing_information in MPEG_media. This Distance, as illustrated in Fig. 28, is a description indicating the acquisition condition regarding the viewing distance to the position (mesh/texture) to which this interactive media is linked. For example, if the viewing distance is closer (shorter) than this Distance, encoded data of the interactive media is acquired.

Therefore, according to this Distance setting, the second information processing device can acquire the encoded data of the interactive media, for example, when it is sufficiently close to the position corresponding to the interactive media to be acquired (when the distance is closer than the Distance setting). In other words, based on this description, the first information processing device can control the second information processing device to acquire the encoded data of the interactive media, for example, when it is sufficiently close to the position corresponding to the interactive media to be acquired (when the distance is shorter than the Distance setting).

For example, the description regarding the acquisition condition may include a description indicating whether the condition is that "the position corresponding to the interactive media is within the field of view." For example, if the description indicates that the condition for acquisition is that the position corresponding to the interactive media is within the field of view, the acquisition unit of the second information processing device may acquire the encoded data of the interactive media when the position is within the field of view.

As illustrated in Fig. 26, "view_frustum" is defined as fetch_timing_information in MPEG_media. As illustrated in Fig. 28, this view_frustum indicates that the encoded data of the interactive media is acquired when the position (mesh/texture) linked with this interactive media is within the field of view of the user (camera).

Therefore, the second information processing device can select whether or not to acquire the encoded data of the interactive media when the position corresponding to the interactive media is within the field of view, for example, according to the view_frustum setting. In other words, based on this description, the first information processing device can control whether the second information processing device acquires the encoded data of the interactive media when the position corresponding to the interactive media is within the field of view.

For example, the description regarding the acquisition conditions may include a description indicating a recommended time to acquire the interactive media. For example, the acquisition unit of the second information processing device may acquire the encoded data of the interactive media at the recommended time indicated by the description.

As illustrated in Fig. 26, "recommended_Fetch_time" is defined as fetch_timing_information in MPEG_media. As illustrated in Fig. 28, this recommended_Fetch_time indicates a time recommended as a time to acquire encoded data of this interactive media. For example, if a scene in which an interaction is likely to occur is known, a recommended time is set so that encoded data can be acquired at that timing (at an earlier timing).

Therefore, the second information processing device can acquire the encoded data of the interactive media at the recommended timing (time) according to the recommended_Fetch_time setting. In other words, using this description, the first information processing device can control the timing (time) at which the second information processing device acquires the encoded data of the interactive media. In other words, with this description, the first information processing device can control the second information processing device to acquire the encoded data of the interactive media at a more appropriate timing (time).

For example, the description regarding the acquisition conditions may include a description indicating a predetermined spatial area in which the interactive media is to be acquired. For example, the acquisition unit of the second information processing device may acquire encoded data of the interactive media when the viewpoint or avatar is located within the spatial area indicated by the description.

As illustrated in Fig. 26, "fetch_boundaries" is defined as fetch_timing_information in MPEG_media. This fetch_boundaries indicates that, as illustrated in Fig. 28, encoded data of interactive media is acquired when the user (camera) is located in a mesh space expressed by this index.

Therefore, the second information processing device can acquire the encoded data of the interactive media according to the setting of fetch_boundaries when the viewpoint or avatar is located within the spatial area indicated by the description. In other words, the first information processing device can control the spatial area from which the second information processing device acquires the encoded data of the interactive media based on this description.

Furthermore, fetch_timing_information may include a description regarding a method for acquiring interactive media. For example, the acquisition unit of the second information processing device may acquire the encoded data of the interactive media according to the description regarding the acquisition method.

The second information processing device can acquire the interactive media based on the description regarding the acquisition method. In other words, the first information processing device can control the method of acquiring the interactive media by the second information processing device using this description.

For example, the description regarding this acquisition method may include a description indicating whether or not encoded data of interactive media is included in the 3D data file. For example, if it is indicated that the encoded data of the interactive media is not included in the 3D data file, the acquisition unit of the second information processing device may acquire the encoded data thereof.

As illustrated in Fig. 26, "delivery_with_texture_video" is defined as fetch_timing_information in MPEG_media. As illustrated in Fig. 28, this delivery_with_texture_video is flag information indicating whether the encoded data of the interactive media is stored in the same file as the 3D data at the position (mesh/texture) linked with the interactive media. For example, if delivery_with_texture_video is true, it indicates that encoded data of interactive media is included in the 3D data file. That is, in this case, since the encoded data of the interactive media can be acquired from the 3D data file, there is no need to acquire any interactive media file other than the 3D data file.

Therefore, the second information processing device can select the source file for the encoded data of the interactive media according to the setting of delivery_with_texture_video. In other words, the second information processing device can select whether to acquire the interactive media file according to the setting of delivery_with texture video. In other words, the first information processing device can control whether or not the second information processing device acquires the interactive media file based on this description.

For example, the description regarding the acquisition method may include a description indicating the priority of interactive media. For example, the acquisition unit of the second information processing device may acquire the encoded data of the interactive media according to this priority.

As illustrated in Fig. 26, "priority" is defined as fetch_timing_information in MPEG_media. As illustrated in Fig. 28, this priority indicates the priority of reproduction or rendering of interactive media. For example, interactive media with a high priority indicate that reproduction or rendering of the interactive media is highly important. For example, it is possible to indicate which of a plurality of media with the same acquisition conditions should be prioritized.

Therefore, the second information processing device can, for example, control the acquisition order of encoded data of interactive media or select encoded data to be acquired, according to this priority setting. For example, the second information processing device may acquire encoded data from interactive media with a high priority first, or may acquire only the encoded data of the interactive media with a sufficiently high priority. In other words, the first information processing device can control the order in which the second information processing device acquires the encoded data of the interactive media and the selection of the encoded data to be acquired by the second information processing device.

Furthermore, fetch_timing_information may include a description regarding the type of interactive media. For example, the acquisition unit of the second information processing device may acquire encoded data of interactive media according to a description regarding the type of interactive media.

The second information processing device can acquire the interactive media based on the description regarding the type of the interactive media. In other words, the first information processing device can control the acquisition of interactive media by the second information processing device using this description.

For example, the description regarding the type of interactive media may include a description indicating whether the interactive media is dynamic media. For example, when it is indicated that the interactive media is dynamic media, the acquisition unit of the second information processing device may acquire the encoded data using a method suitable for the dynamic media.

As illustrated in Fig. 26, "moving_object" is defined as fetch_timing_information in MPEG_media. As illustrated in Fig. 28, since this interactive media moves (is dynamic) in a 3D space, the initial value of the moving_object refers to LoD, Distance, Recommended_Fetch_time, Fetch_boundaries, and the like of Fetch_timinig_information. If moving_object is True, dynamically changing values are acquired from the moving_object_metadata file, which is timed metadata.

Therefore, the second information processing device can acquire encoded data of interactive media in a method suitable for the type of the interactive media according to the setting of moving_object. In other words, with this description, the first information processing device can cause the second information processing device to acquire the encoded data using a method suitable for the type of interactive media. In other words, the second information processing device can acquire the encoded data of the interactive media using a method suitable for the setting of this moving_object. In other words, the first information processing device can control the method by which the second information processing device acquires the encoded data of the interactive media using this description.

For example, the description regarding the type of interactive media may include a description specifying an accessor corresponding to a storage area that stores dynamic media. For example, if the interactive media is dynamic media, the acquisition unit of the second information processing device may store the dynamic media in the storage area corresponding to the accessor specified by this description.

As illustrated in Fig. 26, "accessors" is defined as fetch_timing_information in MPEG_media. As illustrated in Fig. 28, in the accessors, since this interactive media moves in a space, in the case of Moving_object=true, LoD, Distance, Recommended_Fetch_time, and Fetch_boundaries which are dynamically changing Fetch_timinig_information, are acquired through the buffer from the moving_object_metadata file accessed by this accessor.

Therefore, the second information processing device can send and receive interactive media using the buffer corresponding to the accessor indicated by the accessors. In other words, the first information processing device can control the second information processing device to send and receive interactive media using the buffer corresponding to the accessor indicated by the accessors.

### <Material>

Note that when Method 2 is applied, a description regarding the interactive media described above may be described in the material of the scene description file. For example, the file generation unit of the first information processing device may generate a scene description file that stores a description regarding the interactive media in the material. Further, the acquisition unit of the second information processing device may acquire the encoded data of the interactive media based on the description of the interactive media in the material of the scene description file.

### <Method 2-4>

In addition, when Method 2 is applied, as illustrated in the seventh row from the top of the table in Fig. 22, a description regarding interaction media may be stored as file information in the material of the scene description (Method 2-4). For example, the acquisition unit of the second information processing device may acquire the encoded data of the interactive media based on the description of the interactive media in the material of the scene description file.

In the example of Fig. 26, the description regarding the interactive media described above is described in MPEG_media. In other words, the description regarding the interactive media is stored as file information in the material of the scene description. Such a configuration may also be used.

### <Method 2-5>

Furthermore, when Method 2 is applied, as illustrated at the bottom of the table in Fig. 22, a description regarding the interactive media may be stored as pre-processing information of the interactive media in the material of the scene description (Method 2-5). For example, the acquisition unit of the second information processing device may acquire encoded data of the interactive media based on a description regarding the interactive media described as pre-processing information of the interactive media in the material of the scene description file.

Fig. 29 illustrates a description example in that case. In the example of Fig. 29, the description regarding the interactive media described above is described as "properties" (pre-processing information) outside of MPEG_media. In other words, the description regarding the interactive media is stored as pre-processing information in the material of the scene description. Note that an example of the semantics of this properties is illustrated in Fig. 30. Note that examples of the semantics of elements such as event_control, avatar_dependent_media, and fetch_timing_information are the same as those in Fig. 27 and Fig. 28. Such a configuration may also be used.

### <5. First embodiment>

### <File generation device>

The present technology described above can be applied to any device. Fig. 31 is a block diagram illustrating an example of the configuration of a file generation device serving as one aspect of an information processing device in which the present technology is applied. The file generation device 100 illustrated in Fig. 31 is a device that encodes 3D object content (for example, 3D data such as a point cloud) associated with media such as haptics media, and stores it in a file container such as ISOBMFF. The file generation device 100 also generates a scene description file of the 3D object content.

Fig. 31 illustrates main components such as processing units and data flows, but Fig. 31 does not show all components. In other words, processing units not illustrated in Fig. 31 as blocks and processing and data flows not illustrated in Fig. 31 as arrows or the like may be present in the file generation device 100.

As illustrated in Fig. 31, the file generation device 100 includes a control unit 101 and a file generation processing unit 102. The control unit 101 controls the file generation processing unit 102. The file generation processing unit 102 performs processing related to the generation of files, under the control of the control unit 101.

The file generation processing unit 102 includes an input unit 111, a pre-processing unit 112, an encoding unit 113, a pre-processing unit 114, an encoding unit 115, a file generation unit 116, a storage unit 117, and an output unit 118. The file generation unit 116 includes an SD file generation unit 121, a 3D file generation unit 122, and a media file generation unit 123.

The input unit 111 performs processing related to acquisition of 3D object content data. For example, the input unit 111 may acquire 3D data from outside the file generation device 100. Furthermore, the input unit 111 may acquire media data associated with the 3D data from outside of the file generation device 100. The input unit 111 may supply the acquired 3D data to the pre-processing unit 112. The input unit 111 may supply the acquired media data to the pre-processing unit 114.

The pre-processing unit 112 executes processing related to pre-processing performed on 3D data before encoding. For example, the pre-processing unit 112 may acquire 3D data supplied from the input unit 111. Further, the pre-processing unit 112 may acquire information necessary for generating a scene description from the acquired 3D data or the like. Furthermore, the pre-processing unit 112 may supply the acquired information to the file generation unit 116 (the SD file generation unit 121 thereof). Further, the pre-processing unit 112 may supply 3D data to the encoding unit 113.

The encoding unit 113 executes processing related to encoding of 3D data. For example, the encoding unit 113 may acquire 3D data supplied from the pre-processing unit 112. Furthermore, the encoding unit 113 may encode the acquired 3D data and generate the encoded data. Furthermore, the encoding unit 113 may supply the generated encoded data to the file generation unit 116 (the 3D file generation unit 122 thereof).

The pre-processing unit 114 executes processing related to pre-processing performed on media data associated with 3D data before encoding. For example, the pre-processing unit 114 may acquire media data supplied from the input unit 111. Further, the pre-processing unit 114 may acquire information necessary for generating a scene description from the acquired media data or the like. Further, the pre-processing unit 114 may supply the acquired information to the file generation unit 116 (the SD file generation unit 121 thereof). Further, the pre-processing unit 114 may supply media data to the encoding unit 115.

The encoding unit 115 executes processing related to encoding media data. For example, the encoding unit 115 may acquire media data supplied from the pre-processing unit 114. Furthermore, the encoding unit 115 may encode the acquired media data and generate the encoded data. Further, the encoding unit 115 may supply the generated encoded data to the file generation unit 116 (the media file generation unit 123 thereof.

The file generation unit 116 performs processing related to generation of files and the like. The SD file generation unit 121 performs processing related to generation of a scene description file. The 3D file generation unit 122 performs processing related to generation of a 3D file that stores (encoded data of) 3D data. The media file generation unit 123 performs processing related to generation of a media file that stores (encoded data of) media data.

For example, the SD file generation unit 121 acquires information supplied from the encoding unit 113 and information supplied from the encoding unit 115. The SD file generation unit 121 generates a scene description based on the information. Furthermore, the SD file generation unit 121 generates a scene description file and stores the generated scene description. Further, the SD file generation unit 121 supplies the scene description file to the storage unit 117.

The 3D file generation unit 122 acquires encoded data of 3D data supplied from the encoding unit 113. The 3D file generation unit 122 generates a 3D file and stores the encoded data thereof. The 3D file generation unit 122 supplies the 3D file to the storage unit 117.

The media file generation unit 123 acquires encoded data of media data supplied from the encoding unit 115. The media file generation unit 123 generates a media file and stores the encoded data thereof. The media file generation unit 123 supplies the media file to the storage unit 117.

The storage unit 117 has an arbitrary storage medium such as a hard disk or a semiconductor memory, and executes processing related to data storage. For example, the storage unit 117 may acquire the scene description file supplied from the SD file generation unit 121 of the file generation unit 116 and store it in the storage medium. Further, the storage unit 117 may acquire a 3D file supplied from the 3D file generation unit 122 of the file generation unit 116 and store it in the storage medium. Furthermore, the storage unit 117 may acquire a media file supplied from the media file generation unit 123 of the file generation unit 116 and store it in the storage medium. Furthermore, the storage unit 117 may read files and the like recorded on the storage medium and supply them to the output unit 118 according to a request from the control unit 101 or the output unit 118 or at a predetermined timing.

The output unit 118 may acquire the file and the like supplied from the storage unit 117 and output the file and the like to the outside of the file generation device 100 (for example, a distribution server, a reproduction device, and the like).

The file generation device 100 configured as above may be the first information processing device described above, and the present technology described in <3. Support for dynamic haptics media> may be applied.

For example, the SD file generation unit 121 may generate a scene description file that specifies an accessor for storing dynamic haptics media associated with 3D data in a predetermined storage area by applying Method 1. In addition, other methods may be applied. Further, a plurality of present technologies may be applied in combination as appropriate. By doing so, the file generation device 100 can obtain the same effect as described above in <3. Support for dynamic haptics media>. That is, the file generation device 100 can suppress reduction in reproduction performance of media data associated with 3D data.

Furthermore, the file generation device 100 configured as above may be the first information processing device described above, and the present technology described in <4. Support for interactive media> may be applied.

For example, the SD file generation unit 121 may generate a scene description file that includes a description of interactive media associated with 3D data by applying Method 2. In addition, other methods may be applied. Further, a plurality of present technologies may be applied in combination as appropriate. By doing so, the file generation device 100 can obtain the same effect as described above in <4. Support for interactive media>. That is, the file generation device 100 can suppress reduction in reproduction performance of media data associated with 3D data.

### <Flow of file generation processing>

Next, an example of the flow of file generation processing executed by the file generation device 100 will be described with reference to the flowchart of Fig. 32.

When the file generation processing is started, the input unit 111 of the file generation device 100 acquires 3D data and media data associated with the 3D data in step S101.

In step S102, the pre-processing unit 112 performs pre-processing on the 3D data. For example, the pre-processing unit 112 acquires information used to generate a scene description, which is spatial arrangement information for arranging one or more 3D objects in a 3D space, from the 3D data. Further, the pre-processing unit 114 performs pre-processing on the media data. For example, the pre-processing unit 114 acquires information used to generate a scene description, which is spatial arrangement information for arranging one or more 3D objects in a 3D space, from the media data.

In step S103, the SD file generation unit 121 uses the information to generate a scene description file that describes the media data associated with the 3D data.

In step S104, the encoding unit 113 encodes the 3D data and generates the encoded data thereof. Furthermore, the encoding unit 115 encodes media data associated with the 3D data to generate the encoded data thereof.

In step S105, the 3D file generation unit 122 generates a 3D file (ISOBMFF) that stores encoded data of 3D data. Furthermore, the media file generation unit 123 generates a media file (ISOBMFF) that stores encoded data of media data.

In step S106, the storage unit 117 stores the generated scene description file, 3D file, and media file on a storage medium.

In step S107, the output unit 118 reads the scene description file, 3D file, and media file from the storage unit 117, and outputs the read files to the outside of the file generation device 100 at a predetermined timing. For example, the output unit 118 may transmit (upload) the files read from the storage unit 117 to another device such as a distribution server or a reproduction device via a communication medium such as a network. Further, the output unit 118 may record the files and the like read from the storage medium onto an external recording medium such as a removable medium. In that case, the output file may be supplied to another device (such as a distribution server or a reproduction device) via the external recording medium, for example.

Once the processing in step S107 ends, the file generation processing ends.

In the file generation processing described above, the file generation device 100 may be the first information processing device described above, and the present technology described in <3. Support for dynamic haptics media> may be applied.

For example, in step S103, the SD file generation unit 121 may generate a scene description file that specifies an accessor for storing dynamic haptics media associated with 3D data in a predetermined storage area by applying Method 1. In addition, other methods may be applied. Further, a plurality of present technologies may be applied in combination as appropriate. By doing so, the file generation device 100 can obtain the same effect as described above in <3. Support for dynamic haptics media>. That is, the file generation device 100 can suppress reduction in reproduction performance of media data associated with 3D data.

Furthermore, in the above file generation process, the file generation device 100 may be the first information processing device described above, and the present technology described above in <4. Support for interactive media> may be applied.

For example, in step S103, the SD file generation unit 121 may generate a scene description file that includes a description regarding interactive media associated with the 3D data by applying Method 2. In addition, other methods may be applied. Further, a plurality of present technologies may be applied in combination as appropriate. By doing so, the file generation device 100 can obtain the same effect as described above in <4. Support for interactive media>. That is, the file generation device 100 can suppress reduction in reproduction performance of media data associated with 3D data.

### <6. Second embodiment>

### <Client device>

The present technology described above can be applied to any device. Fig. 33 is a block diagram illustrating an example of the configuration of a client device serving as one aspect of an information processing device in which the present technology is applied. The client device 200 illustrated in Fig. 33 is a reproduction device that performs reproduction processing of 3D data and media data associated with the 3D data based on a scene description. For example, the client device 200 acquires a file generated by the file generation device 100, and reproduces 3D data and media data stored in the file. At this time, the client device 200 performs processing related to the reproduction based on the scene description file.

Fig. 33 illustrates main components such as processing units and data flows, and Fig. 33 does not show all components. That is, processing units not illustrated in Fig. 33 as blocks and processing and data flows not illustrated in Fig. 33 as arrows or the like may be present in the client device 200.

As illustrated in Fig. 33, the client device 200 includes a control unit 201 and a client processing unit 202. The control unit 201 performs processing related to controlling the client processing unit 202. The client processing unit 202 performs processing related to reproduction of 3D data and media data.

The client processing unit 202 includes an SD file acquisition unit 211, an SD file analysis unit 212, a 3D file acquisition unit 213, a 3D data decoding unit 214, a buffer 215, a display information generation unit 216, a media file acquisition unit 217, a media data decoding unit 218, a buffer 219, a media information generation unit 220, and an output unit 221.

The SD file acquisition unit 211 performs processing related to acquisition of scene description files. For example, the SD file acquisition unit 211 may acquire a scene description file or the like supplied from outside of the client device 200, such as a distribution server or the file generation device 100. Further, the SD file acquisition unit 211 may supply the acquired scene description file to the SD file analysis unit 212.

The SD file analysis unit 212 performs processing related to analysis of the scene description file. For example, the SD file analysis unit 212 may acquire a scene description file supplied from the SD file acquisition unit 211. Further, the SD file analysis unit 212 may analyze the scene description file and control the 3D file acquisition unit 213 and the media file acquisition unit 217 according to the description. That is, the SD file analysis unit 212 may control the acquisition of 3D files and media files according to the description of the scene description file. Furthermore, the SD file analysis unit 212 may control the 3D data decoding unit 214 and the media data decoding unit 218 according to the description of the scene description file. That is, the SD file analysis unit 212 may control the decoding of 3D data and media data according to the description of the scene description file. Furthermore, the SD file analysis unit 212 may control the buffer 215 and the buffer 219 according to the description in the scene description file. That is, the SD file analysis unit 212 may control the storage of 3D data and media data in the buffer according to the description of the scene description file.

The 3D file acquisition unit 213 performs processing related to acquisition of 3D files under the control of the SD file analysis unit 212. For example, the 3D file acquisition unit 213 may acquire a 3D file or the like supplied from outside of the client device 200, such as a distribution server or the file generation device 100. Further, the 3D file acquisition unit 213 may extract encoded data of 3D data stored in the acquired 3D file and supply the encoded data to the 3D data decoding unit 214.

The 3D data decoding unit 214 performs processing related to 3D data decoding under the control of the SD file analysis unit 212. For example, the 3D data decoding unit 214 may acquire encoded data of 3D data supplied from the 3D file acquisition unit 213. Further, the 3D data decoding unit 214 may decode the encoded data. Further, the 3D data decoding unit 214 may supply the 3D data acquired through the decoding to the buffer 215.

The buffer 215 performs processing related to storing 3D data under the control of the SD file analysis unit 212. For example, the buffer 215 may acquire 3D data supplied from the 3D data decoding unit 214. The buffer 215 may also store the 3D data in a storage area specified in the scene description file. Further, the buffer 215 may read 3D data from the storage area and supply the 3D data to the display information generation unit 216 based on a request from the control unit 201 or the display information generation unit 216 or at a predetermined timing.

The display information generation unit 216 performs processing related to displaying 3D data. For example, the display information generation unit 216 may acquire 3D data read from the buffer 215. Further, the display information generation unit 216 may perform rendering of the 3D data and generate display information (for example, a display image and the like). Further, the display information generation unit 216 may supply the generated display information to the output unit 221.

The media file acquisition unit 217 performs processing related to acquisition of media files under the control of the SD file analysis unit 212. For example, the media file acquisition unit 217 may acquire media files and the like supplied from outside of the client device 200, such as a distribution server or the file generation device 100. Furthermore, the media file acquisition unit 217 may extract encoded data of media data stored in the acquired media file and supply the encoded data to the media data decoding unit 218.

The media data decoding unit 218 performs processing related to decoding of media data under the control of the SD file analysis unit 212. For example, the media data decoding unit 218 may acquire encoded data of 3D data supplied from the media file acquisition unit 217. Furthermore, the media data decoding unit 218 may decode the encoded data. Furthermore, the media data decoding unit 218 may supply the media data acquired through the decoding to the buffer 219.

The buffer 219 performs processing related to storage of media data under the control of the SD file analysis unit 212. For example, the buffer 219 may acquire media data supplied from the media data decoding unit 218. The buffer 219 may also store the media data in a storage area specified in the scene description file. Further, the buffer 219 may read media data from the storage area and supply the media data to the media information generation unit 220 based on a request from the control unit 201 or the media information generation unit 220 or at a predetermined timing.

The media information generation unit 220 performs processing related to outputting media data. For example, the media information generation unit 220 may acquire media data read from the buffer 219. The media information generation unit 220 may also perform rendering of the media data and generate output media information (for example, output haptics media information, output images, and output audio information). Furthermore, the media information generation unit 220 may supply the generated media information to the output unit 221.

The output unit 221 includes a display device, an audio output device, a haptics device (for example, a vibration device), and the like, and performs processing related to output of the above-mentioned display information and media information (image display, audio output, and haptics media output (for example, vibration output)). For example, the output unit 221 may acquire display information supplied from the display information generation unit 216. Furthermore, the output unit 221 may acquire media information supplied from the media information generation unit 220. Further, the output unit 221 may display the acquired display information on a display unit (for example, a display). Further, the output unit 221 may output the acquired media information to a media output unit (for example, a vibration device).

The client device 200 configured as above may be the second information processing device described above, the present technology described in <3. Support for dynamic haptics media> may be applied.

For example, the media file acquisition unit 217 may acquire encoded data of dynamic haptics media associated with the 3D data to be reproduced on the basis of the description of the scene description file by applying Method 1. Furthermore, the media data decoding unit 218 may decode the encoded data based on the description of the scene description file to generate haptics media data. Additionally, the buffer 219 may store haptics media data in a storage area corresponding to an accessor specified by the scene description file. Furthermore, the media information generation unit 220 may read haptics media data stored in the storage area of the buffer 219 based on the description of the scene description file, and generate haptics media information for output. In addition, other methods may be applied. Further, a plurality of present technologies may be applied in combination as appropriate. By doing so, the client device 200 can obtain the same effect as described above in <3. Support for dynamic haptics media>. That is, the client device 200 can suppress reduction in reproduction performance of media data associated with 3D data.

Furthermore, the client device 200 configured as above may be the second information processing device described above, and the present technology described in <4. Support for interactive media> may be applied.

For example, the media file acquisition unit 217 may acquire encoded data of interactive media associated with 3D data to be reproduced on the basis of the description of interactive media included in the scene description file by applying Method 2. Furthermore, the media data decoding unit 218 may decode the acquired encoded data based on the description of the scene description file to generate interactive media data. By doing so, the client device 200 can obtain the same effect as described above in <4. Support for interactive media>. That is, the client device 200 can suppress reduction in reproduction performance of media data associated with 3D data.

### <Flow of reproduction processing>

Next, an example of the flow of the reproduction processing will be described with reference to the flowchart of Fig. 34. When the reproduction processing is started, the SD file acquisition unit 211 of the client device 200 acquires a scene description file in step S201. Furthermore, the SD file analysis unit 212 analyzes the scene description file.

In step S202, the 3D file acquisition unit 213 acquires a 3D file according to the scene description file.

In step S203, the 3D data decoding unit 214 decodes the encoded data of 3D data. The buffer 215 stores the 3D data acquired by the decoding in a storage area specified by the scene description file.

In step S204, the display information generation unit 216 reads the 3D data stored in the buffer 215 and renders the 3D data. That is, the display information generation unit 216 generates display information (display image) using the read 3D data, and supplies the display information to the output unit 221 for display. When the processing in step S204 ends, the processing proceeds to step S209.

In parallel with each process of steps S202 to S204, each process of steps S205 to S208 is executed.

In step S205, the media file acquisition unit 217 acquires a media file according to the scene description file. In step S206, the media file acquisition unit 217 determines whether or not the reproduction conditions of the acquired media file are satisfied, and waits until it is determined that the conditions are satisfied. Furthermore, if it is determined that the reproduction conditions for the acquired media file are satisfied, the processing proceeds to step S207.

In step S207, the media data decoding unit 218 decodes the encoded data of the media data. The buffer 219 stores the 3D data acquired by the decoding in a storage area specified by the scene description file.

In step S208, the media information generation unit 220 reads the media data stored in the buffer 219 and renders the media data. That is, the media information generation unit 220 generates media information (vibration information or the like) using the read media data, and supplies the media information to the output unit 221 for output. When the processing in step S208 ends, the processing proceeds to step S209.

In step S209, the control unit 201 determines whether to end the reproduction process. If it is determined that the processing is not to be ended, the processing returns to step S202 and step S205. Furthermore, if it is determined that the reproduction processing should be ended, the reproduction processing is ended.

In the above-described reproduction process, the client device 200 may be the above-described second information processing device, and the present technology described in <3. Support for dynamic haptics media> may be applied.

For example, the media file acquisition unit 217 may acquire encoded data of dynamic haptics media associated with the 3D data to be reproduced on the basis of the description of the scene description file by applying Method 1. Furthermore, the media data decoding unit 218 may decode the encoded data based on the description of the scene description file to generate haptics media data. Further, the buffer 219 may store the haptics media data in a storage area corresponding to an accessor specified by the scene description file. Furthermore, the media information generation unit 220 may read haptics media data stored in the storage area based on the description of the scene description file, and generate haptics media information for output. In addition, other methods may be applied. Further, a plurality of present technologies may be applied in combination as appropriate. By doing so, the client device 200 can obtain the same effect as described above in <3. Support for dynamic haptics media>. That is, the client device 200 can suppress reduction in reproduction performance of media data associated with 3D data.

Furthermore, the client device 200 configured as above may be the second information processing device described above, and the present technology described in <4. Support for interactive media> may be applied.

For example, the media file acquisition unit 217 may acquire encoded data of the interactive media associated with the 3D data to be reproduced on the basis of the description of the interactive media included in the scene description file by applying Method 2. The media data decoding unit 218 may decode the acquired encoded data based on the description of the scene description file to generate interactive media data. In addition, other methods may be applied. Further, a plurality of present technologies may be applied in combination as appropriate. By doing so, the client device 200 can obtain the same effect as described above in <4. Support for interactive media>. That is, the client device 200 can suppress reduction in reproduction performance of media data associated with 3D data.

### <7. Supplement>

### <Combination>

Each example (each method) of the present technology described above may be applied in combination with other examples (other methods) as appropriate, unless a contradiction occurs. Further, each example of the present technology described above may be applied in combination with other technologies other than those described above.

### <Computer>

The above-described series of processing can be executed by hardware or software. When the series of processing is executed by software, a program that constitutes the software is installed on a computer. Here, the computer includes, for example, a computer built in dedicated hardware and a general-purpose personal computer on which various programs are installed to be able to execute various functions.

Fig. 35 is a block diagram illustrating an example of hardware configuration of a computer that executes the series of processing described above according to a program.

In a computer 900 illustrated in Fig. 35, a central processing unit (CPU) 901, a read only memory (ROM) 902, and a random access memory (RAM) 903 are connected to each other via a bus 904.

An input/output interface 910 is also connected to the bus 904. An input unit 911, an output unit 912, a storage unit 913, a communication unit 914, and a drive 915 are connected to the input/output interface 910.

The input unit 911 is, for example, a keyboard, a mouse, a microphone, a touch panel, or an input terminal. The output unit 912 is, for example, a display, a speaker, or an output terminal. The storage unit 913 is, for example, a hard disk, a RAM disc, or a nonvolatile memory. The communication unit 914 includes, for example, a network interface. The drive 915 drives a removable medium 921 such as a magnetic disk, an optical disc, a magneto-optical disk, or a semiconductor memory.

In the computer configured as above, for example, the CPU 901 performs the above-described a series of processing by loading a program stored in the storage unit 913 to the RAM 903 via the input/output interface 910 and the bus 904 and executing the program. Data and the like necessary for the CPU 901 to execute various kinds of processing are also appropriately stored in the RAM 903.

The program executed by the computer can be recorded in, for example, the removable medium 921 as a package medium or the like and provided in such a form. In such a case, the program can be installed in the storage unit 913 via the input/output interface 910 by inserting the removable medium 921 into the drive 915.

This program can also be provided via wired or wireless transfer medium such as a local area network, the Internet, and digital satellite broadcasting. In such a case, the program can be received by the communication unit 914 and installed in the storage unit 913.

In addition, this program may be installed in advance in the ROM 902, the storage unit 913, or the like.

### <Applicable target of present technology>

The present technology can be applied to any encoding/decoding schemes.

The present technology can be applied in any desired configuration. For example, the present technology can be applied in a variety of electronic devices.

For example, the present technology can be implemented as a configuration of a part of a device such as a processor (for example, a video processor) of a system large scale integration (LSI), a module (for example, a video module) using a plurality of processors or the like, a unit (for example, a video unit) using a plurality of modules or the like, or a set (for example, a video set) with other functions added to the unit.

For example, the present technology can also be applied to a network system configured by a plurality of devices. For example, the present technology may be implemented as cloud computing shared or processed in cooperation with a plurality of devices via a network. For example, the present technology can be implemented in a cloud service providing a service related to images (moving images) to any terminal such as a computer, an audio visual (AV) device, a portable information processing terminal, or an Internet of things (IoT) device.

In the present specification, a system means a set of a plurality of constituent elements (devices, modules (parts), or the like) and all the constituent elements may not be in the same casing. Accordingly, a plurality of devices accommodated in separate casings and connected via a network and a single device accommodating a plurality of modules in a single casing are all a system.

### <Fields and applications to which present technology is applicable>

A system, device, a processing unit, and the like to which the present technology is applied can be used in any field such as traffic, medical treatment, security, agriculture, livestock industries, a mining industry, beauty, factories, home appliance, weather, and natural surveillance, for example. Any purpose can be set.

For example, the present technology can be applied to systems and devices for providing ornamental content and the like. In addition, for example, the present technology can be applied to systems and devices available for traffic, such as traffic condition monitoring and autonomous driving control. Further, for example, the present technology can be applied to systems and devices available for security. In addition, for example, the present technology can be applied to systems and devices available for automatic control of machines and the like. Further, for example, the present technology can be applied to systems and devices available for agriculture and livestock industry. In addition, the present technology can also be applied, for example, to systems and devices for monitoring natural conditions such as volcanoes, forests, and oceans and wildlife. Further, for example, the present technology can be applied to systems and devices available for sports.

### <Others>

In the present specification, "flag" is information for identifying a plurality of states and includes not only information used to identify two states of true (1) and false (0) but also information for identifying three or more states. Accordingly, a value that the "flag" can take may be, for example, 2 values of 1 and 0 or 3 or more values. That is, the number of bits constituting this "flag" is arbitrary, and may be 1 bit or multiple bits. In addition, for identification information (also including the flag), it is assumed that the identification information is included in a bitstream and difference information of the identification information with respect to information serving as a certain standard is included in a bitstream. Therefore, in the present specification, the "flag" or the "identification information" includes not only the information but also difference information with respect to information serving as a standard.

Further, various types of information (metadata, or the like) regarding the encoded data (bit stream) may be transmitted or recorded in any form as long as the information is associated with the encoded data. Here, the term "associate" means, for example, making it possible to use (link) one piece of data when processing the other data. In other words, data associated with each other may be collected as one piece of data or may be individual pieces of data. For example, information associated with encoded data (image) may be transmitted on a transmission path separate from that for the encoded data (image). Further, for example, the information associated with the encoded data (image) may be recorded on a recording medium (or a recording area of the same recording medium) separate from that for the encoded data (image). This "association" may be a part of the data instead of the entire data. For example, an image and information corresponding to the image may be associated with a plurality of frames, one frame, or any unit such as a part in the frame.

Meanwhile, in the present specification, terms such as "synthesize", "multiplex", "add", "integrate", "include", "store", "put in", "enclose", and "insert" may mean, for example, combining a plurality of objects into one, such as combining encoded data and metadata into one piece of data, and means one method of "associating" described above.

Embodiments of the present technology are not limited to the above-described embodiments and can be changed variously within the scope of the present technology without departing from the gist of the present technology.

For example, a configuration described as one device (or processing unit) may be split into and configured as a plurality of devices (or processing units). Conversely, configurations described above as a plurality of devices (or processing units) may be integrated and configured as one device (or processing unit). It is a matter of course that configurations other than the aforementioned configurations may be added to the configuration of each device (or each processing unit). Moreover, some of configurations of a certain device (or processing unit) may be included in a configuration of another device (or another processing unit) as long as the configurations and operations of the overall system are substantially identical to one another.

For example, the aforementioned program may be executed by any device. In this case, the device only needs to have necessary functions (such as functional blocks) to obtain necessary information.

Further, for example, each step of one flowchart may be executed by one device, or may be shared and executed by a plurality of devices. Further, when a plurality of processing is included in one step, one device may execute the plurality of processing, or the plurality of devices may share and execute the plurality of processing. In other words, it is also possible to execute the plurality of processing included in one step as processing of a plurality of steps. On the other hand, it is also possible to execute processing described as a plurality of steps collectively as one step.

Further, for example, in a program that is executed by a computer, processing of steps describing the program may be executed in time series in an order described in the present specification, or may be executed in parallel or individually at a required timing such as when call is made. That is, the processing of the respective steps may be executed in an order different from the above-described order as long as there is no contradiction. Further, the processing of the steps describing this program may be executed in parallel with processing of another program, or may be executed in combination with the processing of the other program.

Further, for example, a plurality of technologies regarding the present technology can be independently implemented as a single body as long as there is no contradiction. Naturally, it is also possible to perform any plurality of present technologies in combination. For example, it is also possible to implement some or all of the present technologies described in any of the embodiments in combination with some or all of the technologies described in other embodiments. Further, it is also possible to implement some or all of any of the above-described technologies in combination with other technologies not described above.

The present technology can also be configured as follows.
(1) An information processing device including:
   an acquisition unit that acquires encoded data of dynamic haptics media associated with 3D data to be reproduced on the basis of a description of a scene description file;
   a decoding unit that decodes the encoded data based on the description of the scene description file and generates data of the haptics media;
   a storage unit that stores the data of the haptics media in a storage area corresponding to an accessor specified by the scene description file; and
   a generation unit that reads the data of the haptics media stored in the storage area based on the description of the scene description file and generate haptics media information for output.
(2) The information processing device according to (1), wherein
   the storage unit stores the data of the haptics media in the storage area corresponding to the accessor specified in material of the scene description file.
(3) The information processing device according to (1) or (2), wherein
   the haptics media includes synchronous haptics media that is reproduced in synchronization with a progress of a scene in a time direction, and
   the generation unit reads data of the synchronous haptics media from the storage area at a timing corresponding to a predetermined reproduction timing and generates the haptics media information.
(4) The information processing device according to any one of (1) to (3), wherein
   the haptics media includes interactive haptics media that is reproduced when a predetermined condition is satisfied in a scene by a user operation, and
   the generation unit reads data of the interactive haptics media from the storage area and generates the haptics media information when the condition is satisfied.
(5) An information processing method including:
   acquiring encoded data of dynamic haptics media associated with 3D data to be reproduced on the basis of a description of a scene description file;
   decoding the encoded data based on the description of the scene description file and generating data of the haptics media;
   storing the data of the haptics media in a storage area corresponding to an accessor specified by the scene description file; and
   reading the data of the haptics media stored in the storage area based on the description of the scene description file and generate haptics media information for output.
(11) An information processing device including:
   a file generation unit that generates a scene description file that specifies an accessor for storing dynamic haptics media associated with 3D data in a predetermined storage area.
(12) The information processing device according to (11), wherein
   the file generation unit generates the scene description file that specifies the accessor in material.
(13) The information processing device according to (11) or (12), wherein
   the haptics media includes synchronous haptics media that is reproduced in synchronization with a progress of a scene in a time direction.
(14) The information processing device according to any one of (11) to (13), wherein
   the haptics media includes interactive haptics media that is reproduced when a predetermined condition is satisfied in a scene by a user operation.
(15) An information processing method including:
   generating a scene description file that specifies an accessor for storing dynamic haptics media associated with 3D data in a predetermined storage area.
(21) An information processing device including:
   an acquisition unit that acquires encoded data of interactive media associated with 3D data to be reproduced on the basis of a description regarding interactive media included in a scene description file; and
   a decoding unit that decodes the acquired encoded data based on the description of the scene description file and generates data of the interactive media.
(22) The information processing device according to (21), wherein
   the description regarding the interactive media includes a description indicating whether interactive processing executed when a predetermined condition is satisfied in a scene by a user operation is possible or not, and
   the acquisition unit acquires the encoded data when it is indicated that the interactive processing is possible.
(23) The information processing device according to (21) or (22), wherein
   the description regarding the interactive media includes a description indicating whether or not the interactive media can be selected according to a user operation or avatar attribute information, and
   the acquisition unit selects the interactive media according to the user operation or the avatar attribute information when it is indicated that the interactive media can be selected and selects the predetermined interactive media when it is indicated that the interactive media cannot be selected.
(24) The information processing device according to any one of (21) to (23), wherein
   the description regarding the interactive media includes a description regarding acquisition of the encoded data, and
   the acquisition unit acquires the encoded data according to the description regarding the acquisition of the encoded data.
(25) The information processing device according to (24), wherein
   the description regarding acquisition of the encoded data includes a description regarding a condition for acquisition, and the acquisition unit acquires the encoded data when the condition is satisfied.
(26) The information processing device according to (25), wherein
   the description regarding the condition includes a description indicating whether the condition is before the initialization of information necessary for a scene, The acquisition unit acquires the encoded data before the information is initialized, when the description indicates that the condition is before initialization of the information.
(27) The information processing device according to (25) or (26), wherein
   the description regarding the condition includes a description indicating LoD at a position corresponding to the interactive media, and
   the acquisition unit acquires the encoded data when the LoD at the position is larger than the LoD indicated by the description.
(28) The information processing device according to any one of (25) to (27), wherein
   the description regarding the condition includes a description indicating a distance to a position corresponding to the interactive media, and
   the acquisition unit acquires the encoded data when a viewpoint or an avatar approaches the position within the distance indicated by the description.
(29) The information processing device according to any one of (25) to (28), wherein
   the description regarding the condition includes a description indicating whether the condition is that the position corresponding to the interactive media is within a field of view, and
   the acquisition unit acquires the encoded data when the description indicates that the condition is that the position is within the field of view and the position is within the field of view.
(30) The information processing device according to any one of (25) to (29), wherein
   the description regarding the condition includes a description indicating a recommended time to acquire the encoded data, and
   the acquisition unit acquires the encoded data at the recommended time indicated by the description.
(31) The information processing device according to any one of (25) to (30), wherein
   the description regarding the condition includes a description indicating a predetermined spatial area, and
   the acquisition unit acquires the encoded data when a viewpoint or an avatar is located within the spatial area indicated by the description.
(32) The information processing device according to any one of (24) to (31), wherein
   the description regarding the acquisition of the encoded data includes a description regarding an acquisition method for the encoded data, and
   the acquisition unit acquires the encoded data according to the description regarding the acquisition method.
(33) The information processing device according to (32), wherein
   the description regarding the acquisition method includes a description indicating whether the encoded data is included in a file of the 3D data, and
   the acquisition unit acquires the encoded data when it is indicated that the encoded data is not included in the file of the 3D data.
(34) The information processing device according to (32) or (33), wherein
   the description regarding the acquisition method includes a description indicating a priority of the encoded data, and
   the acquisition unit acquires the encoded data according to the priority.
(35) The information processing device according to any one of (24) to (34), wherein
   the description regarding the acquisition of the encoded data includes a description regarding a type of the interactive media, and
   the acquisition unit acquires the encoded data according to the description regarding the type of the interactive media.
(36) The information processing device according to (35), wherein
   the description regarding the type of interactive media includes a description indicating whether or not the interactive media is dynamic media, and
   when it is indicated that the interactive media is the dynamic media, the acquisition unit acquires the encoded data in a method according to the dynamic media.
(37) The information processing device according to (35) or (36), wherein
   the description regarding the type of the interactive media includes a description specifying an accessor corresponding to a storage area that stores dynamic media, and
   the acquisition unit stores the acquired encoded data in the storage area corresponding to the specified accessor.
(38) The information processing device according to any one of (21) to (37), wherein
   the acquisition unit acquires the encoded data based on the description of the interactive media in the material of the scene description file.
(39) The information processing device according to (38), wherein
   the acquisition unit acquires the encoded data based on the description regarding the interactive media described as file information of the interactive media in the material.
(40) The information processing device according to (38) or (39), wherein
   the acquisition unit acquires the encoded data based on the description regarding the interactive media described as pre-processing information of the interactive media in the material.
(41) The information processing device according to any one of (21) to (40), wherein
   the interactive media includes haptics information.
(42) The information processing device according to any one of (21) to (41), wherein
   the interactive media includes image information.
(43) The information processing device according to any one of (21) to (42), wherein
   the interactive media includes audio information.
(44) An information processing method including:
   acquiring encoded data of interactive media associated with 3D data to be reproduced on the basis of a description regarding the interactive media included in a scene description file; and
   decoding the acquired encoded data based on the description of the scene description file and generating data of the interactive media.
(51) An information processing device including:
   a file generation unit that generates a scene description file that includes a description regarding interactive media associated with 3D data.
(52) The information processing device according to (51), wherein
   the description regarding the interactive media includes a description indicating whether interactive processing executed when a predetermined condition is satisfied in a scene by a user operation is possible or not.
(53) The information processing device according to (51) or (52), wherein
   the description regarding the interactive media includes a description indicating whether or not the interactive media can be selected according to a user operation or avatar attribute information.
(54) The information processing device according to any one of (51) to (53), wherein
   the description regarding the interactive media includes a description regarding acquisition of the interactive media.
(55) The information processing device according to (54), wherein
   the description regarding the acquisition of the interactive media includes a description regarding the condition for acquisition.
(56) The information processing device according to (55), wherein
   the description regarding the condition includes a description indicating whether the condition is before initialization of information necessary for a scene.
(57) The information processing device according to (55) or (56), wherein
   the description regarding the condition includes a description indicating LoD at a position corresponding to the interactive media to be acquired.
(58) The information processing device according to any one of (55) to (57), wherein
   the description regarding the condition includes a description indicating a distance to a position corresponding to the interactive media to be acquired.
(59) The information processing device according to any one of (55) to (58), wherein
   the description regarding the condition includes a description indicating whether the condition is that the position corresponding to the interactive media is within a field of view.
(60) The information processing device according to any one of (55) to (59), wherein
   the description regarding the condition includes a description indicating a recommended time to acquire the interactive media.
(61) The information processing device according to any one of (55) to (60), wherein
   the description regarding the condition includes a description indicating a predetermined spatial area from which the interactive media is to be acquired.
(62) The information processing device according to any one of (54) to (61), wherein
   the description regarding acquisition of the interactive media includes a description regarding an acquisition method for the interactive media.
(63) The information processing device according to (62), wherein
   the description regarding the acquisition method includes a description indicating whether the interactive media is included in a file of the 3D data.
(64) The information processing device according to (61) or (62), wherein
   the description regarding the acquisition method includes a description indicating a priority of the interactive media.
(65) The information processing device according to any one of (54) to (64), wherein
   the description regarding acquisition of the interactive media includes a description regarding a type of the interactive media.
(66) The information processing device according to (65), wherein
   the description regarding the type of the interactive media includes a description indicating whether or not the interactive media is dynamic media.
(67) The information processing device according to (65) or (66), wherein
   the description regarding the type of the interactive media includes a description specifying an accessor corresponding to a storage area that stores dynamic media.
(68) The information processing device according to any one of (51) to (67), wherein
   the file generation unit generates the scene description file that stores a description regarding the interactive media in material.
(69) The information processing device according to (68), wherein
   the description regarding the interactive media is stored as file information in the material.
(70) The information processing device according to (68) or (69), wherein
   the description regarding the interactive media is stored as pre-processing information in the material.
(71) The information processing device according to any one of (51) to (70), wherein
   the interactive media includes haptics information.
(72) The information processing device according to any one of (51) to (71), wherein
   the interactive media includes image information.
(73) The information processing device according to any one of (51) to (72), wherein
   the interactive media includes audio information.
(74) An information processing method including:
   generating a scene description file that includes a description regarding interactive media associated with 3D data.

### [Reference Signs List]

- 100: File generation device
- 101: Control unit
- 102: File generation processing unit
- 111: Input unit
- 112: Pre-processing unit
- 113: Encoding unit
- 114: Pre-processing unit
- 115: Encoding unit
- 116: File generation unit
- 117: Recording unit
- 118: Output unit
- 121: SD file generation unit
- 122: 3D file generation unit
- 123: Media file generation unit
- 200: Client device
- 201: Control unit
- 202: Client processing unit
- 211: SD file acquisition unit
- 212: SD file analysis unit
- 213: 3D file acquisition unit
- 214: 3D data decoding unit
- 215: Buffer
- 216: Display information generation unit
- 217: Media file acquisition unit
- 218: Media data decoding unit
- 219: Buffer
- 220: Media information generation unit
- 221: Output unit

## Claims

1. An information processing device comprising:
an acquisition unit that acquires encoded data of dynamic haptics media associated with 3D data to be reproduced on the basis of a description of a scene description file;
a decoding unit that decodes the encoded data based on the description of the scene description file and generates data of the haptics media;
a storage unit that stores the data of the haptics media in a storage area corresponding to an accessor specified by the scene description file; and
a generation unit that reads the data of the haptics media stored in the storage area based on the description of the scene description file and generate haptics media information for output.

2. The information processing device according to claim 1, wherein
the storage unit stores the data of the haptics media in the storage area corresponding to the accessor specified in material of the scene description file.

3. An information processing method comprising:
acquiring encoded data of dynamic haptics media associated with 3D data to be reproduced on the basis of a description of a scene description file;
decoding the encoded data based on the description of the scene description file and generating data of the haptics media;
storing the data of the haptics media in a storage area corresponding to an accessor specified by the scene description file; and
reading the data of the haptics media stored in the storage area based on the description of the scene description file and generate haptics media information for output.

4. An information processing device comprising:
a file generation unit that generates a scene description file that specifies an accessor for storing dynamic haptics media associated with 3D data in a predetermined storage area.

5. The information processing device according to claim 4, wherein
the file generation unit generates the scene description file that specifies the accessor in material.

6. An information processing method comprising:
generating a scene description file that specifies an accessor for storing dynamic haptics media associated with 3D data in a predetermined storage area.

7. An information processing device comprising:
an acquisition unit that acquires encoded data of interactive media associated with 3D data to be reproduced on the basis of a description regarding the interactive media included in a scene description file; and
a decoding unit that decodes the acquired encoded data based on the description of the scene description file and generates data of the interactive media.

8. The information processing device according to claim 7, wherein
the description regarding the interactive media includes a description indicating whether interactive processing executed when a predetermined condition is satisfied in a scene by a user operation is possible or not, and
the acquisition unit acquires the encoded data when it is indicated that the interactive processing is possible.

9. The information processing device according to claim 7, wherein
the description regarding the interactive media includes a description indicating whether or not the interactive media can be selected according to a user operation or avatar attribute information, and
the acquisition unit selects the interactive media according to the user operation or the avatar attribute information when it is indicated that the interactive media can be selected and selects the predetermined interactive media when it is indicated that the interactive media cannot be selected.

10. The information processing device according to claim 7, wherein
the description regarding the interactive media includes a description regarding acquisition of the encoded data, and
the acquisition unit acquires the encoded data according to the description regarding the acquisition of the encoded data.

11. The information processing device according to claim 7, wherein
the acquisition unit acquires the encoded data based on a description regarding the interactive media described as file information of the interactive media in material of the scene description file.

12. The information processing device according to claim 7, wherein
the acquisition unit acquires the encoded data based on a description regarding the interactive media described as pre-processing information of the interactive media in material of the scene description file.

13. An information processing method comprising:
acquiring encoded data of interactive media associated with 3D data to be reproduced on the basis of a description regarding the interactive media included in a scene description file; and
decoding the acquired encoded data based on the description of the scene description file and generating data of the interactive media.

14. An information processing device comprising:
a file generation unit that generates a scene description file that includes a description regarding interactive media associated with 3D data.

15. The information processing device according to claim 14, wherein
the description regarding the interactive media includes a description indicating whether interactive processing executed when a predetermined condition is satisfied in a scene by a user operation is possible or not.

16. The information processing device according to claim 14, wherein
the description regarding the interactive media includes a description indicating whether or not the interactive media can be selected according to a user operation or avatar attribute information.

17. The information processing device according to claim 14, wherein
the description regarding the interactive media includes a description regarding acquisition of the interactive media.

18. The information processing device according to claim 14, wherein
the description regarding the interactive media is stored as file information in material of the scene description file.

19. The information processing device according to claim 14, wherein
the description regarding the interactive media is stored as pre-processing information in material of the scene description file.

20. An information processing method comprising:
generating a scene description file that includes a description regarding interactive media associated with 3D data.
